(19) 

Europäisches
Patentamt
European
Patent Office
Office européen
des brevets

(11) **EP 4 557 856 A1**

(12) **EUROPEAN PATENT APPLICATION**
published in accordance with Art. 153(4) EPC

(43) Date of publication:
**21.05.2025 Bulletin 2025/21**

(21) Application number: **22950528.4**

(22) Date of filing: **12.07.2022**

(51) International Patent Classification (IPC):
**H04W 72/04** (2023.01)     **H04W 74/08** (2024.01)

(52) Cooperative Patent Classification (CPC):
**H04L 5/0048; H04L 5/00; H04W 72/04;**
**H04W 74/006; H04W 74/08; H04W 74/0833**

(86) International application number:
**PCT/CN2022/105095**

(87) International publication number:
**WO 2024/011397 (18.01.2024 Gazette 2024/03)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **GUANGDONG OPPO MOBILE**
**TELECOMMUNICATIONS**
**CORP., LTD.**
**Dongguan, Guangdong 523860 (CN)**

(72) Inventor: **HE, Chuanfeng**
**Dongguan, Guangdong 523860 (CN)**

(74) Representative: **Grassi, Stefano**
**Bugnion S.p.A.**
**Viale Lancetti, 17**
**20158 Milano (IT)**

(54) **WIRELESS COMMUNICATION METHOD, TERMINAL DEVICE AND NETWORK DEVICE**

(57)     Embodiments of the present application provide a wireless communication method, a terminal device and a network device, capable of flexibly configuring a resource for repeated PRACH transmission, and avoiding a conflict with a resource for non-repeated PRACH transmission, thereby maintaining backward compatibility. The wireless communication method comprises: a terminal device receives first information, wherein the first information is used for configuring at least one of the following: an association period of a repeated PRACH transmission resource, a PRACH occasion in the association period of the repeated PRACH transmission resource, a duration of the repeated PRACH transmission resource, a PRACH occasion in the duration of the repeated PRACH transmission resource, a preamble associated with repeated PRACH transmission, and RACH configuration special for the repeated PRACH transmission.

FIG. 6

**Description**

TECHNICAL FIELD

Embodiments of the present disclosure relate to the field of communication, and more particularly, to a method for wireless communication, a terminal device and a network device.

BACKGROUND

In a New Radio (NR) system, in order to improve the coverage performance of the Physical Random Access Channel (PRACH), PRACH repetition is introduced. Specifically, PRACH repetition corresponds to the same Random Access Response (RAR) reception window, and the network can combine the reception of PRACH repetition to improve the detection performance, thereby improving the coverage of the PRACH. However, how to configure resources for PRACH repetition to maintain the backward compatibility is a problem that needs to be solved.

SUMMARY

Embodiments of the present disclosure provide a method for wireless communication, a terminal device, and a network device, which can flexibly configure resources for PRACH repetition, and at the same time, which can avoid conflicts with resources for non-PRACH repetition, and maintain the backward compatibility.
In the first aspect, a method for wireless communication is provided. The method includes the following operation.
A terminal device receives first information.
The first information is used to configure at least one of following: association periods in which resources for PRACH repetition are located, PRACH occasions in association periods in which resources for PRACH repetition are located, duration(s) in which resources for PRACH repetition are located, PRACH occasion(s) in duration(s) in which resources for PRACH repetition are located, preamble(s) associated with PRACH repetition, or a Random Access Channel (RACH) configuration dedicated to PRACH repetition.
In the second aspect, a method for wireless communication is provided. The method includes the following operation.
A network device transmits the first information.
The first information is used to configure at least one of following: association periods in which resources for PRACH repetition are located, PRACH occasions in association periods in which resources for PRACH repetition are located, duration(s) in which resources for PRACH repetition are located, PRACH occasion(s) in duration(s) in which resources for PRACH repetition are located, preamble(s) associated with PRACH repetition, or a Random Access Channel (RACH) configuration dedicated to PRACH repetition.
In the third aspect, a terminal device is provided. The terminal device is used for performing the method of the first aspect described above.
Specifically, the terminal device includes a functional module for performing the method of the first aspect described above.
In the fourth aspect, a network device is provided. The network device is used for performing the method of the second aspect described above.
Specifically, the network device includes a functional module for performing the method of the second aspect described above.
In the fifth aspect, a terminal device is provided. The terminal device includes a processor and a memory. The memory is configured to store a computer program, and the processor is configured to invoke and run the computer program stored in the memory to cause the terminal device to perform the method of the first aspect described above.
In the sixth aspect, a network device is provided. The network device includes a processor and a memory. The memory is configured to store a computer program, and the processor is configured to invoke and run the computer program stored in the memory to cause the network device to perform the method of the second aspect described above.
In the seventh aspect, an apparatus is provided. The apparatus is used for implementing the method of any one of the first to second aspects described above.
Specifically, the apparatus includes a processor. The processor is configured to invoke and execute a computer program from a memory to cause a device on which the apparatus is mounted to perform a method of any one of the first to second aspects described above.
In the eighth aspect, a computer readable storage medium is provided. The computer readable storage medium is used for storing a computer program. The computer program causes a computer to perform the method of any of the first to second aspects described above.

In the ninth aspect, a computer program product is provided. The computer program product includes computer program instructions. The computer program instructions cause a computer to perform the method of any of the first to second aspects described above.

In the tenth aspect, a computer program is provided. When the computer program is executed on a computer, the computer performs the method of any one of the first to second aspects described above.

According to the above technical solutions, the network device can flexibly configure resources for PRACH repetition, and at the same time, conflicts with resources for non-PRACH repetition can be avoided, and backward compatibility can be maintained.

BRIEF DESCRIPTION OF THE DRAWINGS

FIG. 1 is a schematic diagram of a communication system architecture applied by embodiments of the present disclosure.

FIG. 2 is a schematic diagram of a synchronization signal/physical broadcast channel (SS/PBCH) block (SSB) provided by the present disclosure.

FIG. 3 is a schematic diagram of PRACH frequency-domain positions provided by the present disclosure.

FIG. 4 is a schematic diagram of a mapping between SSBs and PRACH occasions provided by the present disclosure.

FIG. 5 is a schematic diagram of PRACH repetition provided by the present disclosure.

FIG. 6 is a schematic flowchart of interaction in a method for wireless communication provided according to an embodiment of the present disclosure.

FIG. 7 is a schematic diagram showing a continuous distribution of association periods in a time domain provided according to an embodiment of the present disclosure.

FIG. 8 is a schematic diagram of a mapping between SSBs and PRACH occasions provided according to an embodiment of the present disclosure.

FIG. 9 is schematic diagram of another mapping between SSBs and PRACH occasions according to an embodiment of the present disclosure.

FIG. 10 is a schematic diagram of another mapping between SSBs and PRACH occasions according to an embodiment of the present disclosure.

FIG. 11 is a schematic diagram showing a continuous distribution of durations in a time domain provided according to an embodiment of the present disclosure.

FIG. 12 is a schematic block diagram of a terminal device provided according to an embodiment of the present disclosure.

FIG. 13 is a schematic block diagram of a network device provided according to an embodiment of the present application.

FIG. 14 is a schematic block diagram of a communication device provided according to an embodiment of the present disclosure.

FIG. 15 is a schematic block diagram of an apparatus provided according to an embodiment of the present disclosure.

FIG. 16 is a schematic block diagram of a communication system provided according to an embodiment of the present disclosure.

DETAILED DESCRIPTION

Hereinafter, the technical solutions of the embodiments of the present disclosure will be described with reference to the accompanying drawings of the embodiments of the present disclosure. It is apparent that the described embodiments are part of the embodiments of the present disclosure, but not all of the embodiments. Regarding the embodiments of the present disclosure, all other embodiments obtained by those skilled in the art without creative work fall within the scope of protection of the present disclosure.

The technical solutions of the embodiments of the present disclosure can be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of a NR system, a LTE-based access to unlicensed spectrum (LTE-U) system, an NR-based access to unlicensed spectrum (NR-U) system, a Non-Terrestrial Networks (NTN) system, a Universal Mobile Telecommunication System (UMTS), a Wireless Local Area Networks (WLAN), an internet of things (IoT), a Wireless Fidelity (WiFi), a 5th-Generation (5G) communication system, a 6th-Generation (6G) communication system or other communication systems.

Generally, the conventional communication system supports a limited number of connections and is easy to implement. However, with the development of communication technology, the mobile communication system will support not only conventional communication, but also, for example, Device to Device (D2D) communication, Machine to Machine (M2M) communication, Machine Type Communication (MTC), Vehicle to Vehicle (V2V) communication, sidelink (SL) communication, Vehicle to everything (V2X) communication, and the like. The embodiments of the present disclosure can also be applied to these communication systems.

In some embodiments, the communication system in the embodiments of the present disclosure may be applied to a Carrier Aggregation (CA) scenario, a Dual Connectivity (DC) scenario, a Standalone (SA) network layout scenario, or a Non-Standalone (NSA) network layout scenario.

In some embodiments, the communication system in the embodiments of the present disclosure may be applied to an unlicensed spectrum. The unlicensed spectrum may also be regarded as a shared spectrum. Alternatively, the communication system in the embodiments of the present disclosure may also be applied to a licensed spectrum. The licensed spectrum may also be regarded as a non-shared spectrum.

In some embodiments, the communication system in the embodiments of the present disclosure may be applied to the FR1 frequency band (corresponding to the frequency band range of 410 MHz to 7.125 GHz), the FR2 frequency band (corresponding to the frequency band range of 24.25 GHz to 52.6 GHz), or the new frequency band, such as the high frequency band corresponding to the frequency band range of 52.6 GHz to 71 GHz or the frequency band range of 71 GHz to 114.25 GHz.

In the present disclosure, various embodiments are described in combination with a network device and a terminal device. The terminal device may also be referred to as a User Equipment (UE), an access terminal, a subscriber unit, a subscriber station, a mobile station, a mobile stage, a remote station, a remote terminal, a mobile device, a user terminal, a terminal, a wireless communication device, a user agent or a user device, and the like.

The terminal device may be a STATION (ST) in a WLAN, a cellular telephone, a cordless telephone, a Session Initiation Protocol (SIP) telephone, a Wireless Local Loop (WLL) station, a Personal Digital Assistant (PDA) device, a handheld device having wireless communication capabilities, a computing device or other processing device connected to a wireless modem, an vehicle-mounted device, a wearable device, a terminal device in a next generation communication system such as an NR network, or a terminal device in a future evolved Public Land Mobile Network (PLMN) network, or the like.

In the embodiments of the present disclosure, the terminal device may be deployed on land, which includes an indoor or outdoor device, a hand-held device, a wearable device or a vehicle-mounted device. It may also be deployed on the water (such as a ship, etc.). It may also be deployed in the air (such as an airplane, a balloon and a satellite, etc.).

In the embodiments of the present disclosure, the terminal device may be a Mobile Phone, a tablet (Pad), a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city or a smart home, a vehicle-mounted communication device, a wireless communication chip/application specific integrated circuit (ASIC)/a System on Chip (SoC), or the like.

By way of example and not limitation, in embodiments of the present disclosure, the terminal device may also be a wearable device. The wearable device may also be referred to as a wearable smart device, which is the general name of wearable devices developed by applying wearable technology to intelligently design daily wear, such as glasses, gloves, watches, clothing and shoes. The wearable device is a portable device that is worn directly on the body or integrated into the clothes or accessories of the user. The wearable device is not only a kind of hardware device, but also realizes powerful functions through software support, data interaction and cloud interaction. Generalized wearable smart devices have features of full functions, large size and realizing complete or partial functions without relying on smart phones, such as a smart watch or smart glasses, and a device that only focuses on a certain type of application functions and needs to be used in cooperation with other devices such as smart phones, for example, various smart bracelets, smart jewelries, etc. which may detect physical signs.

In the embodiments of the present disclosure, the network device may be a device for communicating with a mobile device, and the network device may be an Access Point (AP) in the WLAN, a Base Transceiver Station (BTS) in a GSM or CDMA, a NodeB (NB) in a WCDMA, an Evolutional Node B (eNB or eNodeB) in a LTE, a relay station or an AP, a vehicle-mounted device, a wearable device, a network device, a base station (gNB) or a Transmission Reception Point (TRP) in a NR network, a network device in a future evolved PLMN network or a network device in an NTN network, etc.

By way of example and not limitation, in the embodiments of the present disclosure, the network device may have mobile characteristics, for example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, and the like. Alternatively, the network device may also be a base station arranged on land, water and other locations.

In the embodiments of the present disclosure, the network device may provide services for a cell, and the terminal device communicates with the network device through transmission resources (for example, frequency domain resources, or spectrum resources) used by the cell. The cell may be a cell corresponding to the network device (for example, a base station), and the cell may belong to a macro base station or a base station corresponding to a Small cell. The Small cell may include a Metro cell, a Micro cell, a Pico cell, a Femto cell, etc. These Small cells have the features of the small coverage area and the low transmission power, and are suitable for providing high-rate data transmission services.

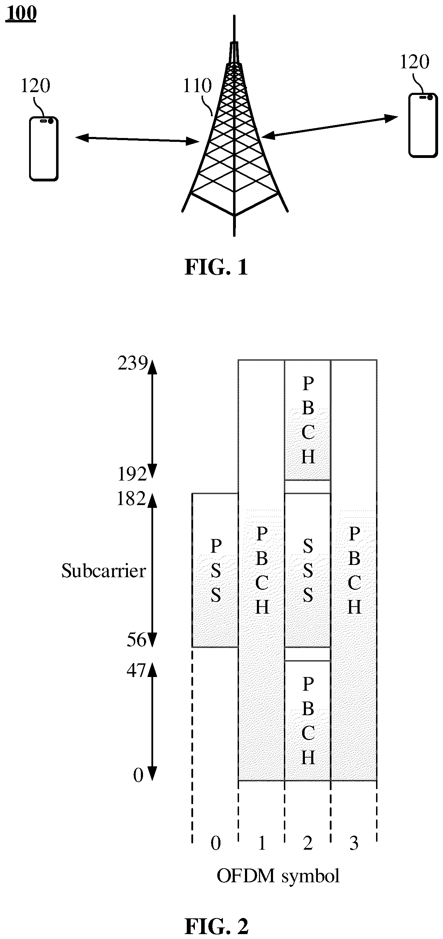

Exemplarily, the communication system 100 to which the embodiments of the present disclosure are applied is illustrated in FIG. 1. The communication system 100 may include a network device 110. The network device 110 may be a device that communicates with a terminal device 120 (or referred to as a communication terminal or a terminal). The network device 110 may provide communication coverage for a particular geographic area and may communicate with terminal devices located within the coverage area.

FIG. 1 exemplarily illustrates one network device and two terminal devices. In some embodiments, the communication system 100 may include multiple network devices and other numbers of terminal devices may be included within the coverage area of each network device, which is not limited by embodiments of the present disclosure.

In some embodiments, the communication system 100 may further include other network entities, such as network controllers, mobility management entities and the like, which are not limited by the embodiments of the present disclosure.

It should be understood that a device having a communication function in a network/system in the embodiments of the present disclosure may be referred to as a communication device. Taking the communication system 100 illustrated in FIG. 1 as an example, the communication device may include a network device 110 and a terminal device 120 that have communication functions, and the network device 110 and the terminal device 120 may be specific devices described above, which will not be repeated here. The communication device may further include other devices in the communication system 100, such as, network controllers, mobility management entities and other network entities, which are not limited in the embodiments of the present disclosure.

It should be understood that the terms "system" and "network" are often used interchangeably in the present disclosure. In the present disclosure, the term "and/or" is merely used for describing an association relationship of associated objects, which indicates that there may be three relationships. For example, A and/or B may represent that there are three situations: A exists alone, A and B exist simultaneously, or B exists alone. In addition, the character "/" in the present disclosure generally indicates that there is a "or" relationship between the associated objects.

It should be understood that the present disclosure relates to the first communication device and the second communication device. The first communication device may be a terminal device such as a cell phone, a machine facility, a Customer Premise Equipment (CPE), an industrial device, a vehicle, or the like. The second communication device may be a peer communication device of the first communication device, such as a network device, a mobile phone, an industrial device, a vehicle, or the like. In the embodiments of the present disclosure, the first communication device may be a terminal device, and the second communication device may be a network device (i.e., uplink communication or downlink communication). Alternatively, the first communication device may be the first terminal, and the second communication device may be the second terminal (i.e., sideline communication).

The terms used in the embodiments of the present disclosure is for the purpose of explanation of specific embodiments of the present disclosure only, and is not intended to limit the present disclosure. The terms "first", "second", "third" and "fourth" etc. in the description, claims and the accompanying drawings of the present disclosure are used to distinguish different objects, and are not used to describe a specific order. Furthermore, the terms "including" and "having" as well as any variations thereof, are intended to cover non-exclusive inclusions.

It should be understood that the "indication" mentioned in the embodiments of the present disclosure may be a direct indication, an indirect indication, or represent an associated relationship. For example, A indicates B, which may mean that A directly indicates B, for example, B can be acquired by A. It may also mean that A indicates B indirectly, for example, A indicates C, and B can be acquired through C. It may also represent that there is an association relationship between A and B.

In the description of the embodiments of the present disclosure, the term "correspondence" may represent that there is a direct correspondence or indirect correspondence between the two objects, may represent that there is an associated relationship between the two objects, or may represent a relationship between indicating and being instructed, configuring and being configured, or the like.

In the embodiments of the present disclosure, "predefined" or "preconfigured" may be realized by storing corresponding codes, tables, or other methods that can be used to indicate relevant information in advance in devices (including, for example, the terminal device and the network device), and specific implementations are not limited in the present disclosure. For example, "predefined" may refer to "defined" in the protocol.

In the embodiments of the present disclosure, the "protocol" may refer to a standard protocol in the field of communication, for example, an evolution for an existing protocol related to an LTE protocol, an NR protocol, a Wi-Fi protocol, or other communication systems, and the protocol type is not limited in the present disclosure.

In order to facilitate understanding of the technical solutions of the embodiments of the present disclosure, the technical solutions of the present disclosure will be described in detail below with reference to specific examples. The following related technologies may be arbitrarily combined with the technical solutions of the embodiments of the present disclosure as optional solutions, and all of them belong to the scope of protection of the embodiments of the present disclosure. Embodiments of the present disclosure include at least some of the following contents.

Common channels and signals in the NR system, such as synchronization signals and broadcast channels, need to cover the entire cell through multi-beam scanning, which is convenient for terminals in the cell to receive. Multi-beam transmission of synchronization signals (SS) is implemented by defining a synchronization signal/physical broadcast channel (SS/PBCH) burst set. One SS/PBCH burst set contains one or more SS/PBCH signal blocks. One SS/PBCH block is used to carry the synchronization signal and broadcast channel of one beam. Therefore, one SS/PBCH burst set may contain synchronization signals of beams (the number of beams is the number of SS blocks in the cell), that is, one SS/PBCH burst set may include synchronization signals of X beams, and X represents the number of SS blocks in the cell.

In some embodiments, the maximum L of the SS block number is related to the frequency band of the system. For example, at a frequency range less than 3 GHz, L = 4, at the frequency range of 3 GHz to 6 GHz, L = 8, and at the frequency range of 6 GHz to 52.6 GHz, L = 64.

As illustrated in FIG. 2, an SS/PBCH block (SSB) contains a Primary Synchronization Signal (PSS) of an Orthogonal frequency-division multiplexing (OFDM) symbol, a Secondary Synchronization Signal (SSS) of an OFDM symbol and Physical broadcast channel (PBCHs) of two OFDM symbols. The time-frequency resources occupied by the PBCHs contain Demodulation Reference Signals (DMRS), which are used for demodulation of the PBCHs.

All the SS/PBCH blocks in the SS/PBCH burst set are transmitted within a time window of 5ms, and are repeatedly transmitted at a certain period. The period is configured by the higher-layer parameter SSB-timing, which includes 5ms, 10ms, 20ms, 40ms, 80ms, 160ms, etc. For the UE, an SSB index is obtained by the received SS/PBCH block. The range of the index of the SSB is [0, L-1]. L is the maximum number of SSBs corresponding to the frequency band in which the SSBs are located. The SSB index corresponds to the relative position of the SSB in the time window of 5ms. The UE obtains frame synchronization according to the information and the half-frame indication carried in the PBCH. The index of the SS/PBCH block is indicated by the DMRS of the PBCH or the information carried by the PBCH.

In order to facilitate a better understanding of the embodiments of the present disclosure, the RACH process related to the present disclosure will be described.

In the NR, a Random Access Channel (RACH) resource configured for an accessed UE is defined, which includes 256 configurations. The RACH resource configuration information used by the cell is indicated to the accessed UE in the system message. Each RACH resource configuration contains a preamble format, a period, a radio frame offset, a subframe number in a radio frame, a starting symbol in a subframe, the number of PRACH slots within a subframe, the number of PRACH occasions within a PRACH slot, and a duration of a PRACH occasion. Through the indicated information, time, frequency and code information of the PRACH resource may be determined. As illustrated in Table 1 below, the PRACH Configuration Index equals to 86, which represents a preamble format, a radio frame, a subframe, a starting symbol, a duration, and the like in which the PRACH occasion is located.

Table 1

| PRACH Configu-ration Index | Preamb-le format | $n_{SFN}$ mod x = y | | Subframe number | Starting symbol | Number of PRACH slots within a subframe | $N_t^{RA,slot}$, number of time-domain PRACH occasions within a PRACH slot | $N_{dur}^{RA}$, PRACH duration |
|---|---|---|---|---|---|---|---|---|
| | | x | y | | | | | |
| 86 | A1 | 1 | 0 | 0,1,2,3,4,5 ,6,7,8,9 | 7 | 1 | 3 | 2 |

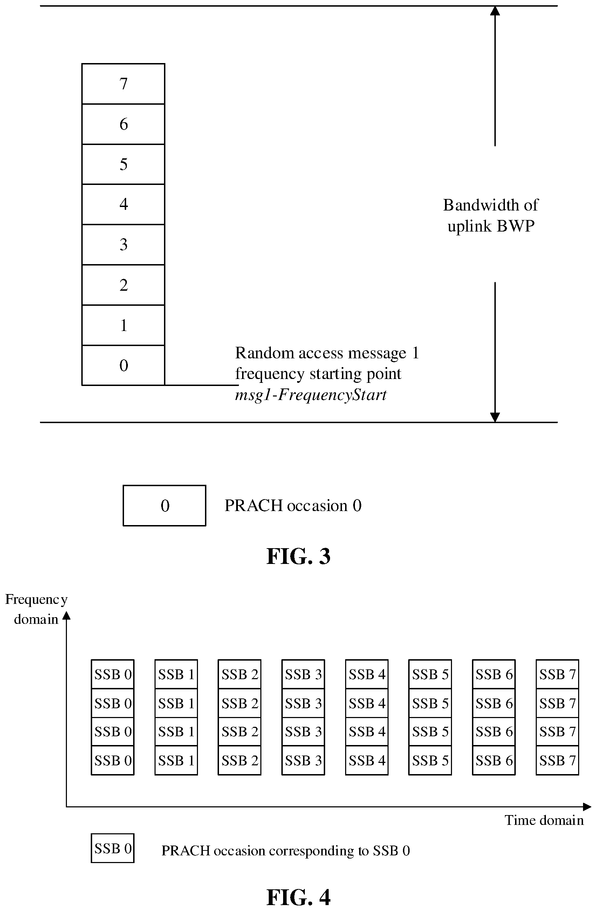

In addition to the time domain resource position of the RACH resource, the frequency domain resource position of the RACH resource may be indicated by parameters (such as random access message 1 frequency starting point (msg1-FrequencyStart) and random access message 1 frequency-division multiplexing (msg1-FDM) in higher-layer signaling RACH ConfigGeneric). The msg1-FrequencyStart determines the offset of the starting position of the Resource Block (RB) of PRACH occasion 0 from the frequency domain starting position of the uplink common Band Width Part (i.e., BWP 0), that is, the frequency domain starting position of the RACH resource is determined. The value of msgl-FDM is {1, 2, 4, 8}, which determines the number of frequency domain PRACH occasions, and for the number of RBs occupied by the PRACH on the service channel, a preamble sequence is indicated by prach-RootSequenceIndex, and then the number of RBs occupied by the PUSCH is determined together according to ΔfRA. The schematic diagram of the PRACH frequency domain position is illustrated in FIG. 3, and msgl-FDM equals to 8.

For the UE, on the basis of the RACH resource configuration indicated by the system message, the association relationship between the SSB and the PRACH resource is also indicated, so that the UE may determine the RACH resource that it can use based on the detected SSB and the association relationship. Each SSB is associated with one or more PRACH occasions and also associated with multiple Contention Based preambles. That is, each SSB index is associated with some specific resources in the RACH resource configuration indicated in the system message.

The higher layer configures, through parameters SSB of each RACH occasion (SSB-perRACH-Occasion) and contention based preamble of each SSB (CB-PreamblesPerSSB), that N (ssb-perRACH-Occasion) SSBs are associated with one PRACH occasion, and the number of contention based preambles of each SSB on each valid PRACH occasion (CB-PreamblesPerSSB).

If N < 1, one SSB maps to 1/N consecutive valid PRACH occasions. For example, N = 1/4, one SSB maps 4 PRACH occasions. R preambles with consecutive indexes are mapped to SSB n, 0 < = n < = N - 1, and each valid PRACH occasion starts from preamble index 0.

If N > = 1, R preambles with consecutive indexes are mapped to SSB n, 0 < = n < = N-1, and each valid PRACH occasion starts with preamble index $n \cdot N_{preamble}^{total}/N$. For example, n = 2, $N_{preamble}^{total} = 64$, then two SSBs map one PRACH occasion. For these two SSBs n, n = 0, 1. When n = 0, preamble indexes of SSB 0 starts from 0. When n = 1, preamble indexes of SSB 1 starts from 32. The preamble indexes of SSB 0 are 0 to 31, and the preamble indexes of SSB 1 are 32 to "the configured contention based preamble"-1. One valid PRACH occasion corresponds to the entire number of contention based preambles. In this way, one valid PRACH occasion covers two SSBs, so each of two SSBs occupies part of preambles, which is different from N < 1. $N_{preamble}^{total}$ is configured by the total number of random access preambles (totalNumberOfRA-Preambles) and is an integer multiple of N.

Specifically, for example, ssb-perRACH-Occasion and CB-PreamblesPerSSB may be as follows:

```
ssb-perRACH-OccasionAndCB-PreamblesPerSSB CHOICE {
oneFourth ENUMERATED {n4, n8, n12, n16, n20, n24, n28, n32, n36, n40, n44, n48, n52,
n56, n60, n64}.
```

The signaling represents that one SSB is associated with four PRACH occasions, and n4 represents that one SSB is associated with four contention based preambles, and so on. The total number of contention based preambles in a PRACH occasion is CB-preambles-per-SSB * max (1, SSB-per-rach-occasion).

In some embodiments, the mapping of SSB to PPRACH occasion should follow the following order.

Firstly, in a PRACH occasion, the order of preambles indexes is incremental.

Secondly, the order of indexes of frequency resources of frequency multiplexing PRACH occasions is incremental.

Thirdly, the order of indexes of the time domain resources of the time domain multiplexing PRACH occasions in the PRACH slot is incremental.

Fourthly, the order of indexes of PRACH slots is incremental.

The mapping relationship between the SSB and the PPRACH occasion is explained below by way of example. For example, the number of SSBs is 8 (numbered as 0 to 7), and msgl-FDM = 4 (representing the number of frequency domain PRACH occasions). When ssb-perRACH-Occasion = 1/4, the schematic diagram of the mapping among SSBs and PRACH occasions may be illustrated in FIG. 4.

In order to facilitate a better understanding of the embodiments of the present disclosure, PRACH repetition related to the present disclosure will be described.

In the random access procedure, after the UE transmits a PRACH, the UE receives the RAR transmitted by the network in the RAR reception window. When the UE does not receive the RAR, the UE will transmit the PRACH again on the next available PRACH resource, and increases the power of the PRACH by one step.

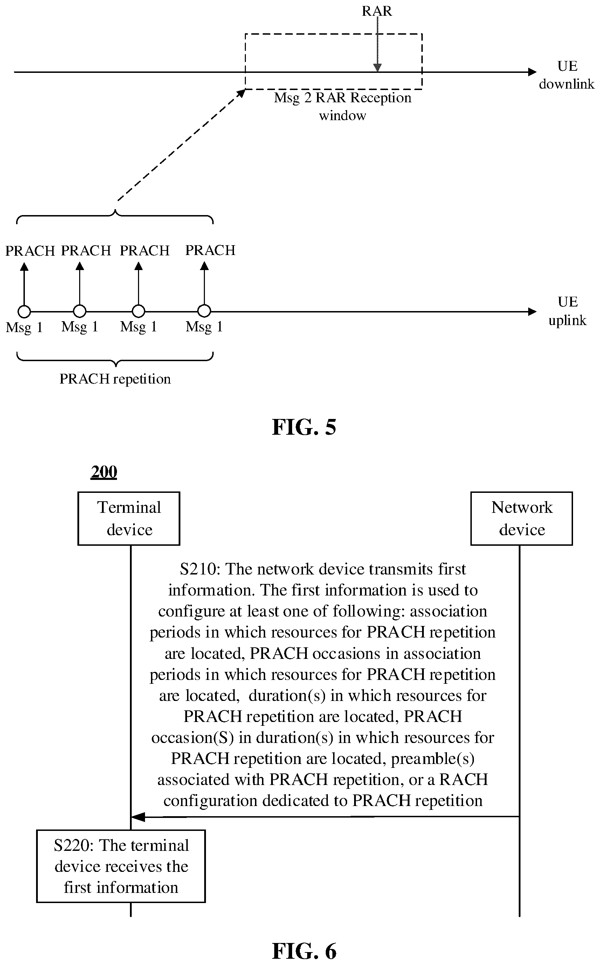

However, in the case of limited coverage, the UE cannot indefinitely increase the power of the PRACH to cause the network to detect. In order to improve the coverage performance of the PRACH, PRACH repetition is introduced into the NR system. As illustrated in FIG. 5, PRACH repetition (transmitting random access message 1 (message 1, Msg 1) four times) corresponds to the same RAR reception window (random access message 2 (message 2, Msg 2)), and the network can combine the reception of PRACH repetition to improve the detection performance, thereby improving the coverage of the PRACH.

In order to facilitate a better understanding of the embodiments of the present disclosure, the problems solved by the present disclosure will be described.

After the introduction of PRACH repetition, how to configure the resources for PRACH repetition and how to maintain the backward compatibility are problems that need to be solved.

Based on the above problems, the present disclosure proposes a solution for configuring resources for PRACH repetition. In this way, a network device can flexibly configure resources for PRACH repetition, and at the same time, conflicts with resources for non-PRACH repetition can be avoided, and backward compatibility can be maintained.

Hereinafter, the technical solutions of the present disclosure will be described in detail with reference to specific embodiments.

FIG. 6 is a schematic flowchart of a method 200 for wireless communication according to an embodiment of the present disclosure. As illustrated in FIG. 6, the method 200 for wireless communication may include at least some of the following contents.

In operation S210, a network device transmits first information. The first information is used to configure at least one of following: association periods in which resources for PRACH repetition are located, PRACH occasions in association periods in which resources for PRACH repetition are located, duration(s) in which resources for PRACH repetition are located, PRACH occasion(s) in duration(s) in which resources for PRACH repetition are located, preamble(s) associated with PRACH repetition, or a RACH configuration dedicated to PRACH repetition.

In operation S220, the terminal device receives the first information.

In the embodiments of the present disclosure, PRACH repetition corresponds to the same RAR reception window, and the network device may combine the reception of PRACH repetition to improve the detection performance, thereby improving the coverage performance of the PRACH.

In the embodiments of the present disclosure, the network device can flexibly configure resources for PRACH repetition, and at the same time, conflicts with resources for non-PRACH repetition can be avoided, and backward compatibility can be maintained.

In some embodiments, the first information may be carried by one of following: Radio Resource Control (RRC) signaling, Downlink Control Information (DCI), Media Access Control Control Element (MAC CE), system messages, and broadcast messages.

In some embodiments, in case that the first information is at least used to configure the association periods in which the resources for PRACH repetition are located, the resources for PRACH repetition are located in M association periods. Each of the M association periods includes at least one PRACH occasion for PRACH repetition, M is a positive integer, and M > 1.

In some embodiments, the number of the M association periods is less than or equal to the number of times of PRACH repetition. Specifically, each of the M association periods includes at least one PRACH occasion for PRACH repetition, and each transmission of the PRACH occupies one PRACH occasion, so that the number of the M association periods is less than or equal to the number of times of PRACH repetition.

It should be noted that, at this stage, the SSB and the PRACH occasion are mapped within one association period. During the association period, $N_{TX}^{SSB}$ SSBs and the PRACH occasions configured by the network should be mapped at least once. That is, each of the $N_{TX}^{SSB}$ SSBs needs to be mapped to at least one PRACH occasion. $N_{TX}^{SSB}$ is the number of SSBs actually transmitted. The value of $N_{TX}^{SSB}$ is indicated by an ssb-PositionsInBurst field, or the value of $N_{TX}^{SSB}$ is obtained by a ServingCellConfigCommon signaling. The association period is an integral multiple of the PRACH configuration period, and the value range of the integral multiple is illustrated in Table 2 below. The value of the association period is the minimum value in the value range of the integral multiple of the PRACH configuration period, which satisfies that the $N_{TX}^{SSB}$ SSBs and the PRACH occasions configured by the network are mapped at least once.

Table 2

| PRACH configuration period (msec) | Association period (number of PRACH configuration periods) |
|---|---|
| 10 | {1, 2, 4, 8, 16} |
| 20 | {1, 2, 4, 8} |
| 40 | {1, 2, 4} |
| 80 | {1, 2} |
| 160 | {1} |

In case that PRACH repetition is adopted, after the terminal device determines the target SSB, it is necessary to select the PRACH resource associated with the target SSB to initiate random access. In order to implement PRACH repetition, it is necessary to select multiple PRACH occasions associated with the target SSB to implement PRACH repetition. The multiple PRACH occasions are different PRACH occasions in the time domain. When configuring resources for PRACH repetition, it may be implemented by configuring multiple association periods. The number of association periods may be less than or equal to the number of times of PRACH repetition. For example, the number of times of PRACH repetition is N, and the resources for PRACH repetition configured by the network are located in M association periods. At least one PRACH occasion associated with the target SSB is determined in each association period for PRACH transmission.

In some embodiments, PRACH occasions for PRACH repetition in the M association periods are associated with at least one SSB.

The at least one SSB at least includes the target SSB determined by the terminal device. That is, at least one PRACH occasion associated with at least one SSB is determined in each of the M association periods for PRACH transmission.

Alternatively, the SSBs other than the target SSB among the at least one SSB are determined based on the signal quality. For example, at least one SSB is sequentially selected in the order of the SSB signal quality from high to low (the SSB having the best signal quality is the target SSB).

In some embodiments, the at least one SSB includes an SSB 1 and an SSB 2. The SSB 1 is the target SSB determined by the terminal device. For example, SSB2 is an SSB whose signal quality is approximately the same as that of SSB1, or SSB2 is an SSB whose signal quality is slightly worse than that of SSB1, or SSB2 is a previous target SSB.

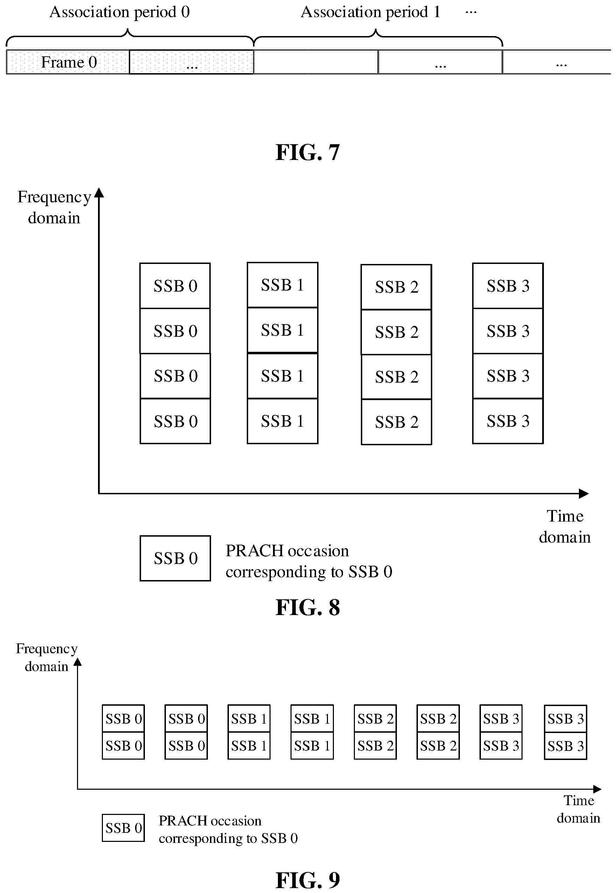

In some embodiments, the association periods are continuously divided starting from radio frame number 0. In the time domain, as illustrated in FIG. 7, consecutive association periods are shown. The values of the association periods may be shown in Table 2 above. In order to determine the association period in which the resource for PRACH repetition is located, when the network device configures resources for PRACH repetition, the association periods may be numbered as 0... Y-1 starting from frame 0 to frame 1023. Y represents the number of association periods from frame 0 to frame 1023. The network device indicates the position of the first association period in which the resource for PRACH repetition is located through the indication information. The specific PRACH resources in M consecutive association periods starting from the first association period are used as resources for PRACH repetition.

In some embodiments, the first information includes identification information or position information of the first association period among the M association periods, or the first information includes an information field for indicating identification information or position information of the first association period among the M association periods. The M association periods are M consecutive association periods starting from the first association period.

Alternatively, the identification information of the first association period may be one of the following: an identification of the first association period, an index of the first association period, and identification number of the first association period.

In some embodiments, the identification information of the first association period is determined based on at least one of following: starting point parameter of association periods, offset of association periods, or system frame number. For example, the starting point parameter of association period may be a period in which the position of the first association period occurs, which may be configured by the network device, or stipulated by a protocol.

Specifically, for example, identification number of the first association period is determined based on the following equation 1:

$$j * S + O \qquad\qquad \text{Equation 1.}$$

S represents the period in which the position of the first association period occurs, O represents the offset of the association period, and j = 0, 1, 2...

In some embodiments, the identification information of the M association periods is determined based on at least one of following: starting point parameter of association periods, the number of association periods, or system frame number. For example, the starting point parameter of association period may be a period in which the position of the first association period occurs, which may be configured by the network device, or stipulated by a protocol.

Specifically, for example, identification numbers of M association periods are determined based on the following equation 2:

$$j * S + m \qquad\qquad \text{Equation 2.}$$

S represents the period in which the position of the first association period occurs, m = 0.. M-1, and j = 0, 1, 2...

Specifically, j = 0 represents a period from the 0th frame 0 to the frame 1023, j = 1 represents a period from the first frame 0 to frame 1023, j = 2 represents a period from the second frame 0 to frame 1023, and so on.

In some embodiments, the number of M association periods is determined based on at least one of following: the number of times of PRACH repetition, or the number of time division PRACH occasions associated with one SSB in the association periods.

In some embodiments, the number of time division PRACH occasions associated with one SSB in the association periods is determined based on the following parameters: ssb-perRACH-Occasion and msgl-FDM.

Herein, ssb-perRACH-Occasion represents the number of SSBs associated with each PRACH occasion, and msgl-FDM represents the number of frequency domain PRACH occasions.

Specifically, for example, as illustrated in FIG. 8, it is assumed that the number of SSBs is 4, and when msgl-FDM = 4 and ssb-perRACH-Occasion = 1/4, the number of time domain PRACH occasions associated with one SSB is 1.

Specifically, for example, as illustrated in FIG. 9, it is assumed that the number of SSBs is 4, and when msgl-FDM = 2 and ssb-perRACH-Occasion = 1/4, the number of time domain PRACH occasions associated with one SSB is 2.

In some embodiments, in case that ssb-perRACH-Occasion * msgl-FDM $\leq$ 1, M = N * ssb-perRACH-Occasion * msgl-FDM. In case that ssb-perRACH-Occasion * msgl-FDM > 1, M = N.

Herein, ssb-perRACH-Occasion represents the number of SSBs associated with each PRACH occasion, msgl-FDM represents the number of frequency domain PRACH occasions, N represents the number of times of PRACH repetition, or N represents the number of PRACH occasions for PRACH repetition, and M is rounded up when M is a non-integer.

That is, when ssb-perRACH-Occasion * msgl-FDM $\leq$ 1, the number of time division PRACH occasions associated with one SSB in one association period is 1/(ssb-perRACH-Occasion * msgl-FDM). When ssb-perRACH-Occasion * msgl-FDM > 1, the number of time division PRACH occasions associated with one SSB in one association period is 1. The number of time division PRACH occasions associated with one SSB in M association periods is N.

In some embodiments, the PRACH occasions for PRACH repetition in the M association periods are preconfigured or stipulated by a protocol.

In some embodiments, at least one time division PRACH occasion associated with an SSB in one association period is preconfigured or stipulated by a protocol for PRACH repetition.

In some embodiments, k time division PRACH occasions associated with one SSB in one association period are used for PRACH repetition, and k is a positive integer. Alternatively, the value of k is preconfigured or stipulated by the protocol. Specifically, for example, the first k time division PRACH occasions associated with one SSB in one association period are used for PRACH repetition, or the last k time division PRACH occasions associated with one SSB in one association period are used for PRACH repetition, or the k time division PRACH occasions in middle positions associated with one SSB in one association period are used for PRACH repetition.

In some embodiments, the S-th time division PRACH occasion associated with one SSB in one association period is used for PRACH repetition, or the W-th PRACH occasion in the frequency domain on the S-th time division PRACH occasion associated with one SSB in one association period is used for PRACH repetition. S and W are both positive integers.

Alternatively, the values of S and/or W are preconfigured or stipulated by the protocol.

Specifically, for example, when the target SSB is associated with multiple PRACH occasions in one association period, the PRACH occasion for the PRACH transmission may be determined by predefining. For example, the first time division PRACH occasion in one association period may be predefined. If there are multiple frequency multiplexed PRACH occasions in one time division PRACH occasion, the first PRACH occasion in the frequency domain on the first time division PRACH occasion in one association period is predefined. Multiple PRACH occasions among the multiple PRACH occasions associated with the target SSB in one association period may also be predefined. For example, the first two time division PRACH occasions in one association period are predefined. The above is merely an example, and the specific predefined PRACH occasions are not limited.

In some embodiments, in case that the first information is at least used to configure the PRACH occasions in the association periods in which the resource for PRACH repetition is located, the first information is used to configure PRACH occasions for PRACH repetition in the M association periods. Each of the M association periods includes at least one PRACH occasion for PRACH repetition, M is a positive integer, and M > 1.

In some embodiments, the first information includes identification information or position information of part or all of the M association periods, and/or the first information includes identification information or position information of PRACH occasions for PRACH repetition in the M association periods.

Specifically, for example, it is assumed that the first information includes identification information or position information of part of the M association periods, and since the association periods are consecutive in the time domain, the identification information or position information of other association periods in the M association periods may be determined by the identification information or position information of the known association periods.

In some embodiments, the first information includes at least one first information element. The at least one first information element indicates identification information or position information of part or all of the M association periods. Alternatively, the first information field may be an existing information field (such as a PRACH mask index), or may be another existing information element or a newly defined information element, which is not limited in the present disclosure.

In some embodiments, the first information includes at least one second information element. The at least one second information element indicates identification information or position information of PRACH occasions for PRACH repetition in the M association periods. Alternatively, the second information field may be an existing information field (such as a PRACH mask index), or may be another existing information element or a newly defined information element, which is not limited in the present disclosure.

In some embodiments, multiple PRACH occasions associated with one SSB in an association period are numbered in the sequence of first frequency domain and then time domain, or multiple PRACH occasions associated with one SSB in an association period are numbered in the sequence of first time domain and then frequency domain. That is, multiple PRACH occasions associated with one SSB in one association period may be numbered.

In some embodiments, the at least one second information element may respectively indicate identification number of at least one PRACH occasion in multiple PRACH occasions associated with the target SSB in the M association periods.

In some embodiments, identification number of PRACH occasion associated with the target SSB in each of the M association periods may be the same or different.

Specifically, for example, in case that identification number of the PRACH occasion associated with the target SSB in each of the M association periods is the same, the number of the at least one second information element is the number of the PRACH occasions associated with the target SSB in each association period.

Specifically, for example, in case that identification number of the PRACH occasion associated with the target SSB in each of the M association periods is different, the number of the at least one second information element is the number of the PRACH occasions associated with the target SSB in the M association periods.

In some embodiments, the second information element indicates identification number of one PRACH occasion in multiple PRACH occasions associated with the target SSB in the M association periods, or the second information element indicates identification numbers of odd PRACH occasions in multiple PRACH occasions associated with the target SSB in the M association periods, or the second information element indicates identification numbers of even PRACH occasions in multiple PRACH occasions associated with the target SSB in the M association periods, or the second information element indicates identification numbers of first K PRACH occasions in multiple PRACH occasions associated with the target SSB in the M association periods, or the second information element indicates identification numbers of last K PRACH occasions in multiple PRACH occasions associated with the target SSB in the M association periods. K is a positive integer. Alternatively, the number of the at least one second information element is 1. That is, the at least one second information element may include only one second information element.

Specifically, for example, when the target SSB is associated with multiple PRACH occasions in one association period, the PRACH occasions for PRACH repetition of the target SSB in the association periods may be determined by configuration through a network. For example, the network configures the identification numbers of PRACH occasions for PRACH transmission in one association period. The identification numbers of the PRACH occasions are the identification numbers of multiple PRACH occasions associated with one SSB, for example, the range of identification numbers is 1-8. The order of identification numbers may be in the sequence of first frequency domain and then time domain. Specifically, for example, the identification number of one PRACH occasion in multiple PRACH occasions associated with one SSB may be configured by the PRACH Mask Index information element. Further, when the target SSB is associated with multiple PRACH occasions in one association period, the network may further configure multiple PRACH occasions for PRACH repetition. For this reason, the configuration may be performed by indicating multiple PRACH Mask Index information elements, or the PRACH occasion information represented by the PRACH Mask Index information element may be extended, to indicate more PRACH occasions. The PRACH occasions that may be indicated by the 4-bit PRACH Mask Index are illustrated in Table 3 below. PRACH Mask Index = 11-15, which are reserved values. For the configuration of resources for PRACH repetition, more PRACH occasion information may be indicated by the PRACH Mask Index. For example, when the target SSB is associated with eight PRACH occasions and msg1-FDM = 1, PRACH occasions 1-4 or 5-8 may be indicated by the PRACH Mask Index, and PRACH Mask Index = 11 and 12 may be used to represent PRACH occasions 1-4 and 5-8, respectively.

Table 3

| PRACH Mask Index | PRACH occasion associated with SSB |
|---|---|
| 0 | All |
| 1 | PRACH occasion index 1 |
| 2 | PRACH occasion index 2 |
| 3 | PRACH occasion index 3 |
| 4 | PRACH occasion index 4 |
| 5 | PRACH occasion index 5 |

(continued)

| PRACH Mask Index | PRACH occasion associated with SSB |
|---|---|
| 6 | PRACH occasion index 6 |
| 7 | PRACH occasion index 7 |
| 8 | PRACH occasion index 8 |
| 9 | Every even PRACH occasion |
| 10 | Every odd PRACH occasion |
| 11 | Reserved |
| 12 | Reserved |
| 13 | Reserved |
| 14 | Reserved |
| 15 | Reserved |

In some embodiments, multiple time division PRACH occasions associated with one SSB in one association period are numbered in sequence in the time domain. That is, the multiple time division PRACH occasions associated with one SSB in one association period may be numbered.

In some embodiments, the at least one second information element may respectively indicate identification number of at least one time division PRACH occasion in time division PRACH occasions associated with the target SSB in the M association periods.

In some embodiments, the identification number of the time division PRACH occasions associated with the target SSB in each of the M association periods may be the same or different.

Specifically, for example, in case that the identification number of the time division PRACH occasion associated with the target SSB in each of the M association periods is the same, the number of the at least one second information element is the number of the time division PRACH occasions associated with the target SSB in each association period.

Specifically, for example, in case that the identification number of the time division PRACH occasion associated with the target SSB in each of the M association periods is different, the number of the at least one second information element is the number of the time division PRACH occasions associated with the target SSB in the M association periods.

In some embodiments, the second information element indicates identification number of one time division PRACH occasion in multiple time division PRACH occasions associated with the target SSB in the M association periods, or the second information element indicates identification numbers of odd time division PRACH occasions in multiple time division PRACH occasions associated with the target SSB in the M association periods, or the second information element indicates identification numbers of even time division PRACH occasions in multiple time division PRACH occasions associated with the target SSB in the M association periods, or the second information element indicates identification numbers of first K time division PRACH occasions in multiple time division PRACH occasions associated with the target SSB in the M association periods, or the second information element indicates identification numbers of last K time division PRACH occasions in multiple time division PRACH occasions associated with the target SSB in the M association periods. K is a positive integer. Alternatively, the number of the at least one second information element is 1. That is, the at least one second information element may include only one second information element.

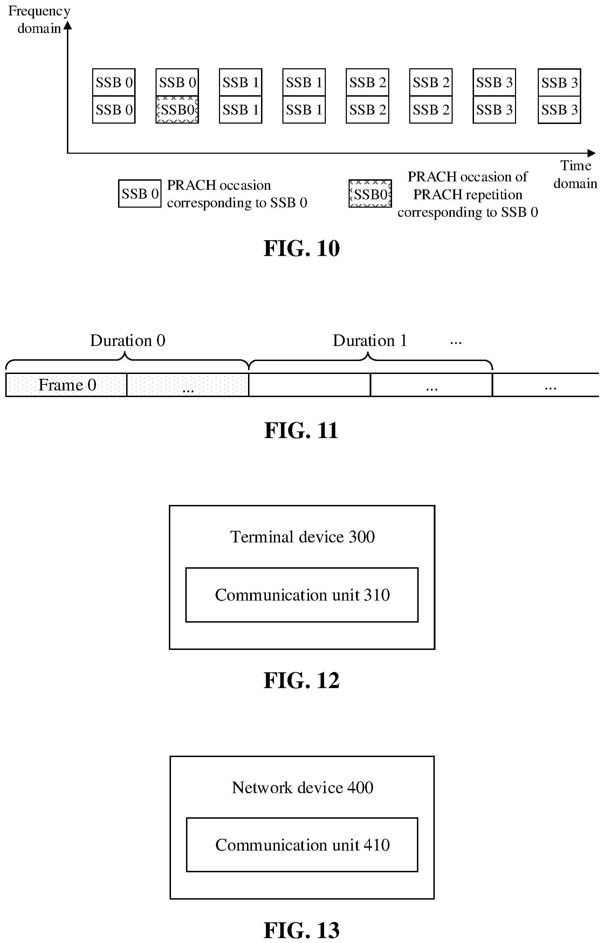

Specifically, for example, for a terminal device that uses PRACH repetition, the meaning of the PRACH occasion indicated by the PRACH Mask Index may be redefined as a time division PRACH occasion. For this reason, the multiple time division PRACH occasions associated with one SSB may be numbered. For example, the range of identification number is 1-8, which represents the first to eighth time division PRACH occasions. Accordingly, the PRACH occasion index i in the above Table 3 represents the i-th time division PRACH occasion. As illustrated in FIG. 10, the network device may indicate the second PRACH occasion in the time division PRACH occasions associated with the SSB0 as the PRACH occasion for PRACH repetition.

In some embodiments, in case that the first information is at least used to configure the duration in which the resource for PRACH repetition is located and/or the PRACH occasion in the duration in which the resource for PRACH repetition is located, the resource for PRACH repetition is located in at least one duration. Each of the at least one duration includes at least one PRACH occasion for PRACH repetition.

In the present embodiment, duration(s) may be defined, and the resource for PRACH repetition is located in at least one duration. Specifically, for example, as illustrated in FIG. 11, starting from frame 0, durations may be continuously divided, and each duration includes a certain number of PRACH resources.

In some embodiments, the first information includes identification information or position information of part or all of the at least one duration, and/or the first information includes identification information or position information of a PRACH occasion for PRACH repetition in the at least one duration.

Specifically, for example, it is assumed that the first information includes identification information or position information of part of at least one duration. Since the durations are consecutive in the time domain, identification information or position information of other duration in at least one duration may be determined by known identification information or position information of duration(s).

In some embodiments, the first information includes at least one third information element. The at least one third information element indicates identification information or position information of part or all of the at least one duration.

In some embodiments, the first information includes at least one fourth information element. The at least one fourth information element indicates identification information or position information of the PRACH occasion for PRACH repetition in the at least one duration.

In some embodiments, the first information may include identification information or position information of the first of the at least one duration. At least one consecutive duration starting from the first duration is the at least one duration. The manners for specifically indicating the first duration and determining the at least one duration may refer to the above solutions with respect to the association periods, which will not be repeated in the present disclosure.

In some embodiments, the at least one duration includes the first duration.

The first duration includes part or all of M association periods. The resources for PRACH repetition are located in the M association periods. Each of the M association periods includes at least one PRACH occasion for PRACH repetition, M is a positive integer, and M > 1. Specifically, the description of the M association periods in the present embodiment may refer to the above related description of the M association periods, which will not be repeated herein.

In some embodiments, the correspondence between the duration and the association period is configured by the network device, or the correspondence between the duration and the association period is stipulated by a protocol.

Specifically, for example, the duration may be defined as an association period corresponding to PRACH repetition. The duration may also be configured by the network, which is not limited herein.

In some embodiments, the number of PRACH occasions available for PRACH repetition in the first duration is greater than the number of times of PRACH repetition, or the number of PRACH occasions available for PRACH repetition in the first duration is less than the number of times of PRACH repetition, or the number of PRACH occasions available for PRACH repetition in the first duration is equal to the number of times of PRACH repetition.

In some embodiments, in case that the number of PRACH occasions available for PRACH repetition in the first duration is less than the number of times of PRACH repetition, after determining the PRACH occasions available for PRACH repetition in the first duration, PRACH occasions available for PRACH repetition in a next duration of the first duration are determined until the determined number of PRACH occasions satisfies the number of times of PRACH repetition.

Specifically, for example, when the number of PRACH occasions available for PRACH repetition in the first duration is greater than or equal to the number of times of PRACH repetition N, it may be determined that N PRACH occasions of the PRACH occasions are used for PRACH repetition, such as the first N PRACH occasions in time. When the number of PRACH occasions available for PRACH repetition in the first duration is less than the number of times of PRACH repetition N, in addition to the determination of the PRACH occasions available for PRACH repetition in the first duration, the PRACH occasions available for PRACH repetition in the next duration are continued to be determined until the determined number of PRACH occasions satisfies the number of times of PRACH repetition N.

In some embodiments, multiple PRACH occasions associated with one SSB in one duration are numbered in the sequence of first frequency domain and then time domain, or multiple PRACH occasions associated with one SSB in one duration are numbered in the sequence of first time domain and then frequency domain. That is, multiple PRACH occasions associated with one SSB in one duration may be numbered.

In some embodiments, the at least one fourth information element respectively indicates identification number of at least one PRACH occasion in multiple PRACH occasions associated with the target SSB in the at least one duration.

In some embodiments, the identification number of PRACH occasion associated with the target SSB in each of the at least one duration may be the same or different.

Specifically, for example, in case that the identification number of the PRACH occasion associated with the target SSB in each of the at least one duration is the same, the number of the at least one fourth information element is the number of the PRACH occasions associated with the target SSB in each duration.

Specifically, for example, in case that the identification number of the PRACH occasion associated with the target SSB in each of the at least one duration is different, the number of the at least one fourth information element is the number of the PRACH occasions associated with the target SSB in the at least one duration.

In some embodiments, the fourth information element indicates identification number of one PRACH occasion in multiple PRACH occasions associated with the target SSB in the at least one duration, or the fourth information element indicates identification numbers of odd PRACH occasions in multiple PRACH occasions associated with the target SSB in the at least one duration, or the fourth information element indicates identification numbers even PRACH occasions in multiple PRACH occasions associated with the target SSB in the at least one duration, or the fourth information element indicates identification numbers of first K PRACH occasions in multiple PRACH occasions associated with the target SSB in the at least one duration, or the fourth information element indicates identification numbers of last K PRACH occasions in multiple PRACH occasions associated with the target SSB in the at least one duration. K is a positive integer. Alternatively, the number of the at least one fourth information element is 1. That is, the at least one fourth information element may include only one fourth information element.

In some embodiments, multiple time division PRACH occasions associated with one SSB in one duration are numbered in sequence in the time domain. That is, the multiple time division PRACH occasions associated with one SSB in one duration may be numbered.

In some embodiments, the at least one fourth information element respectively indicates identification number of at least one time division PRACH occasion in time division PRACH occasions associated with the target SSB in the at least one duration.

In some embodiments, the identification number of the time division PRACH occasions associated with the target SSB in each of the at least one duration may be the same or different.

Specifically, for example, in case that the identification number of the time division PRACH occasion associated with the target SSB in each of the at least one duration is the same, the number of the at least one fourth information element is the number of the time division PRACH occasions associated with the target SSB in each duration.

Specifically, for example, in case that the identification number of the time division PRACH occasion associated with the target SSB in each of the at least one duration is different, the number of the at least one fourth information element is the number of the time division PRACH occasions associated with the target SSB in at least one duration.

In some embodiments, the fourth information element indicates identification number of one time division PRACH occasion in multiple time division PRACH occasions associated with the target SSB in the at least one duration, or the fourth information element indicates identification numbers of odd time division PRACH occasions in multiple time division PRACH occasions associated with the target SSB in the at least one duration, or the fourth information element indicates identification numbers of even time division PRACH occasions in multiple time division PRACH occasions associated with the target SSB in the at least one duration, or the fourth information element indicates identification numbers of first K time division PRACH occasions in multiple time division PRACH occasions associated with the target SSB in the at least one duration, or the fourth information element indicates identification numbers of last K time division PRACH occasions in multiple time division PRACH occasions associated with the target SSB in the at least one duration. K is a positive integer. Alternatively, the number of the at least one fourth information element is 1. That is, the at least one fourth information element may include only one fourth information element.

In some embodiments, the first information includes feature combination element information associated with PRACH repetition. The feature combination element information is used to configure at least one of following: the association periods in which the resources for PRACH repetition are located, the PRACH occasions in the association periods in which the resources for PRACH repetition are located, the duration(s) in which the resources for PRACH repetition are located and the PRACH occasion(s) in the duration(s), or preamble(s) associated with PRACH repetition.

In some embodiments, the feature combination element information associated with PRACH repetition is different from the feature combination element information used by the conventional UE in the PRACH transmission, and it may be feature combination element information dedicated to PRACH repetition.

In some embodiments, the feature combination element information associated with PRACH repetition may be compatible with the feature combination element information used by the conventional UE in the PRACH transmission.

It should be noted that, in order to distinguish the access of terminals supporting different features by the PRACH resources in the random access process, the network configures the PRACH resources according to one Feature Combination. Specifically, the FeatureCombinationPreambles information element is used to configure preamble sets or shared PRACH occasions. These preamble sets or shared PRACH occasions are associated with a feature combination. The feature combination is configured by the information element FeatureCombination. After introducing PRACH repetition, it is also necessary to configure the PRACH resources associated with PRACH repetition. Therefore, it is possible to configure PRACH resources associated with PRACH repetition by taking PRACH repetition as one feature in the Feature Combination. For example, the preamble sets or PRACH occasions for PRACH repetition are configured by the FeatureCombinationPreambles information element. The preamble sets are used for PRACH repetition, to be distinguished from the preamble used by the conventional UE on the same PRACH occasion. For example, the configuration of the PRACH occasion is indicated by the PRACH Mask Index. The multiple PRACH Mask Indexes may be indicated. Alternatively, multiple PRACH occasions in an associated period are indicated by defining a list of PRACH occasions.

In some embodiments, in case that the first information is at least used to configure the RACH configuration dedicated to PRACH repetition, the first information includes a PRACH configuration index dedicated to PRACH repetition. The PRACH configuration index dedicated to PRACH repetition indicates the RACH configuration dedicated to PRACH repetition. That is, the network may separately configure a PRACH configuration index (prach-ConfigurationIndex) for PRACH repetition to distinguish from the PRACH resources used by the conventional UE. Through this configuration, sharing with RACH resources of the conventional UE can be avoided, and the influence on random access of the conventional UE can be reduced. For example, the PRACH occasion used for PRACH repetition is different from the PRACH used for the PRACH transmission of the conventional UE.

Specifically, for example, the RACH configuration dedicated to PRACH repetition may include, but is not limited to, at least one of the following: preamble format, the number of times of retransmission, the maximum number of times of retransmission, retransmission timer, period, radio frame offset, subframe number in adio frame, starting symbol in subframe, the number of PRACH slots in subframe, the number of PRACH occasions in PRACH slot, or duration of PRACH occasion. Through these indicated information, the time, frequency and code information of the resource for PRACH repetition may be determined.

In some embodiments, the RACH configuration dedicated to PRACH repetition includes an uplink BWP dedicated to PRACH repetition. That is, the uplink BWP may be specifically configured for PRACH repetition. PRACH repetition of the UE selects the PRACH resource on the uplink BWP for transmission. For example, the BWP in which the resource for PRACH repetition is located is different from the BWP in which the resource for the PRACH transmission of the conventional UE is located.

Therefore, in the embodiments of the present disclosure, the network device can flexibly configure resources for PRACH repetition, and at the same time, conflicts with resources for non-PRACH repetition can be avoided, and backward compatibility can be maintained. That is, according to the embodiments of the present disclosure, conflicts with PRACH resources of the conventional UE can be avoided, and influence on random access of the conventional UE can be avoided.

The above describes the method embodiments of the present disclosure in detail with reference to FIG. 6 to FIG. 11. The following describes the apparatus embodiments of the present disclosure in detail with reference to FIG. 12 to FIG. 16. It should be understood that the apparatus embodiments and the method embodiments correspond to each other, and similar descriptions may be made with reference to the method embodiments.

FIG. 12 illustrates a schematic block diagram of a terminal device 300 according to an embodiment of the present disclosure. The terminal device 300 illustrated in FIG. 12 includes a communication unit 310.

The communication unit 310 is configured to receive first information.

The first information is used to configure at least one of following: association periods in which resources for PRACH repetition are located, PRACH occasions in association periods in which resources for PRACH repetition are located, duration(s) in which resources for PRACH repetition are located, PRACH occasion(s) in duration(s) in which resources for PRACH repetition are located, preamble(s) associated with PRACH repetition, or a RACH configuration dedicated to PRACH repetition.

In some embodiments, in case that the first information is at least used to configure the association periods in which the resources for PRACH repetition are located, the resources for PRACH repetition are located in M association periods. Each of the M association periods includes at least one PRACH occasion for PRACH repetition, M is a positive integer, and M > 1.

In some embodiments, the number of the M association periods is less than or equal to the number of times of PRACH repetition.

In some embodiments, the PRACH occasions for PRACH repetition in the M association periods are associated with at least one SSB.

The at least one SSB at least includes a target SSB determined by the terminal device.

In some embodiments, the first information includes identification information or position information of the first association period among the M association periods. The M association periods are M consecutive association periods starting from the first association period.

In some embodiments, the identification information of the first association period is determined based on at least one of following: starting point parameter of association periods, offset of association periods, or system frame number, and/or identification information of the M association periods is determined based on at least one of following: starting point parameter of association periods, the number of the association periods, or system frame number.

In some embodiments, a number of the M association periods is determined based on at least one of following: the number of times of PRACH repetition, or the number of time division PRACH occasions associated with one SSB in the association periods.

In some embodiments, the number of the time division PRACH occasions associated with one SSB in the association periods is determined based on following parameters: ssb-perRACH-Occasion and msgl-FDM.

Herein, ssb-perRACH-Occasion represents the number of SSBs associated with each PRACH occasion, and msgl-FDM represents the number of frequency domain PRACH occasions.

In some embodiments, in case that ssb-perRACH-Occasion * msgl-FDM $\leq$ 1, M = N * ssb-perRACH-Occasion * msgl-FDM.

In case that ssb-perRACH-Occasion * msgl-FDM > 1, M = N.

Herein, ssb-perRACH-Occasion represents a number of SSBs associated with each PRACH occasion, msgl-FDM represents a number of frequency domain PRACH occasions, N represents a number of times of PRACH repetition, or N represents a number of PRACH occasions for PRACH repetition, and M is rounded up when M is a non-integer.

In some embodiments, the PRACH occasions for PRACH repetition in the M association periods are preconfigured or stipulated by the protocol.

In some embodiments, at least one time division PRACH occasion associated with one SSB in an association period is preconfigured or stipulated by the protocol for PRACH repetition.

In some embodiments, in case that the first information is at least used to configure the PRACH occasions in the association periods in which the resources for PRACH repetition are located, the first information is used to configure the PRACH occasions for PRACH repetition in the M association periods. Each of the M association periods includes at least one PRACH occasion for PRACH repetition, M is a positive integer, and M > 1.

In some embodiments, the first information includes identification information or position information of part or all of the M association periods, and/or the first information includes identification information or position information of the PRACH occasions for PRACH repetition in the M association periods.

In some embodiments, the first information includes at least one first information element. The at least one first information element indicates identification information or position information of part or all of the M association periods.

Alternatively, the first information includes at least one second information element. The at least one second information element indicates identification information or position information of the PRACH occasions for PRACH repetition in the M association periods.

In some embodiments, in case that the first information is at least used to configure the duration(s) in which the resources for PRACH repetition are located and/or the PRACH occasion(s) in the duration(s) in which the resources for PRACH repetition are located, the resources for PRACH repetition are located in at least one duration. Each of the at least one duration comprises at least one PRACH occasion for PRACH repetition.

In some embodiments, the first information includes identification information or position information of part or all of the at least one duration, and/or the first information includes identification information or position information of the PRACH occasions for PRACH repetition in the at least one duration.

In some embodiments, the first information includes at least one third information element. The at least one third information element indicates identification information or position information of part or all of the at least one duration.

Alternatively, the first information includes at least one fourth information element. The at least one fourth information element indicates identification information or position information of the PRACH occasion(s) for PRACH repetition in the at least one duration.

In some embodiments, the at least one duration includes the first duration.

The first duration includes part or all of the M association periods, the resource for PRACH repetition are located in the M association periods, each of the M association periods includes at least one PRACH occasion for PRACH repetition, M is a positive integer, and M > 1.

In some embodiments, a correspondence between a duration and an association period is configured by a network device, or a correspondence between a duration and an association period is stipulated by a protocol.

In some embodiments, a number of the PRACH occasions available for PRACH repetition in the first duration is greater than or equal to a number of times of PRACH repetition, or a number of the PRACH occasions available for PRACH repetition in the first duration is less than a number of times of PRACH repetition.

In some embodiments, in case that the number of the PRACH occasions available for PRACH repetition in the first duration is less than the number of times of PRACH repetition, after determining the PRACH occasion(s) for PRACH repetition in the first duration, the PRACH occasion(s) for PRACH repetition in a next duration of the first duration are determined until a determined number of PRACH occasions satisfies the number of times of PRACH repetition.

In some embodiments, the first information includes feature combination element information associated with PRACH repetition. The feature combination element information is used to configure at least one of following: the association periods in which the resources for PRACH repetition are located, the PRACH occasions in the association periods in which the resources for PRACH repetition are located, the duration(s) in which the resources for PRACH repetition are located and the PRACH occasion(s) in the duration(s), or preamble(s) associated with PRACH repetition.

In some embodiments, in case that the first information is at least used to configure the RACH configuration dedicated to PRACH repetition, the first information includes a PRACH configuration index dedicated to PRACH repetition. The PRACH configuration index dedicated to PRACH repetition indicates the RACH configuration dedicated to PRACH repetition.

In some embodiments, the RACH configuration dedicated to PRACH repetition includes an uplink BWP dedicated to PRACH repetition.

In some embodiments, the above communication unit may be a communication interface, a transceiver, an input-output interface of a communication chip or a system-on-chip. The processing unit may be one or more processors.

It should be understood that the terminal device 300 based on the embodiment of the present disclosure may correspond to the terminal device in the method embodiments of the present disclosure, and the above and other operations and/or functions of the various units in the terminal device 300 are used for implementing the corresponding flows of the terminal device in the method 200 illustrated in FIG. 6, which are not repeated here for the sake of brevity.

FIG. 13 illustrates a schematic block diagram of a network device 400 according to an embodiment of the present disclosure. The network device 400 illustrated in FIG. 13 includes a communication unit 410.

The communication unit 410 is configured to transmit first information.

The first information is used to configure at least one of following: association periods in which resources for PRACH repetition are located, PRACH occasions in association periods in which resources for PRACH repetition are located, duration(s) in which resources for PRACH repetition are located, PRACH occasion(s) in duration(s) in which resources for PRACH repetition are located, preamble(s) associated with a PRACH repetition, or a RACH configuration dedicated to PRACH repetition.

In some embodiments, in case that the first information is at least used to configure the association periods in which the resources for PRACH repetition are located, the resources for PRACH repetition are located in M association periods. Each of the M association periods includes at least one PRACH occasion for PRACH repetition, M is a positive integer, and M > 1.

In some embodiments, the number of the M association periods is less than or equal to the number of times of PRACH repetition.

In some embodiments, the PRACH occasions for PRACH repetition in the M association periods are associated with at least one SSB.

The at least one SSB at least comprises a target SSB determined by the terminal device.

In some embodiments, the first information includes identification information or position information of a first association period among the M association periods. The M association periods are M consecutive association periods starting from the first association period.

In some embodiments, the identification information of the first association period is determined based on at least one of following: starting point parameter of association periods, offset of association periods, or system frame number, and/or identification information of the M association periods is determined based on at least one of following: starting point parameter of association periods, the number of the association periods, or system frame number.

In some embodiments, a number of the M association periods is determined based on at least one of following: a number of times of PRACH repetition, or a number of time division PRACH occasions associated with one SSB in the association periods.

In some embodiments, the number of the time division PRACH occasions associated with one SSB in the association periods is determined based on following parameters: ssb-perRACH-Occasion and msg1-FDM.

Herrin, ssb-perRACH-Occasion represents the number of SSBs associated with each PRACH occasion, and msg1-FDM represents the number of frequency domain PRACH occasions.

In some embodiments, in case that ssb-perRACH-Occasion * msg1-FDM $\leq$ 1, M = N * ssb-perRACH-Occasion * msg1-FDM.

In case that ssb-perRACH-Occasion * msg1-FDM > 1, M = N.

Herein, ssb-perRACH-Occasion represents the number of SSBs associated with each PRACH occasion, msg1-FDM represents the number of frequency domain PRACH occasions, N represents a number of times of PRACH repetition, or N represents the number of PRACH occasions for PRACH repetition, and M is rounded up when M is a non-integer.

In some embodiments, the PRACH occasions for PRACH repetition in the M association periods are preconfigured or stipulated by the protocol.

In some embodiments, at least one time division PRACH occasion associated with one SSB in an association period is preconfigured or stipulated by the protocol for PRACH repetition.

In some embodiments, in case that the first information is at least used to configure the PRACH occasions in the association periods in which the resources for PRACH repetition are located, the first information is used to configure the PRACH occasions for PRACH repetition in the M association periods. Each of the M association periods includes at least one PRACH occasion for PRACH repetition, M is a positive integer, and M > 1.

In some embodiments, the first information includes identification information or position information of part or all of the M association periods, and/or the first information includes identification information or position information of the PRACH occasions for PRACH repetition in the M association periods.

In some embodiments, the first information includes at least one first information element. The at least one first information element indicates identification information or position information of part or all of the M association periods.

Alternatively, the first information includes at least one second information element. The at least one second information element indicates identification information or position information of the PRACH occasions for PRACH repetition in the M association periods.

In some embodiments, in case that the first information is at least used to configure the duration(s) in which the resources for PRACH repetition are located and/or the PRACH occasion(s) in the duration(s) in which the resources for PRACH repetition are located, the resources for PRACH repetition are located in at least one duration. Each of the at least one duration includes at least one PRACH occasion for PRACH repetition.

In some embodiments, the first information includes identification information or position information of part or all of the at least one duration, and/or the first information includes identification information or position information of the PRACH occasions for PRACH repetition in the at least one duration.

In some embodiments, the first information includes at least one third information element. The at least one third information element indicates identification information or position information of part or all of the at least one duration.

Alternatively, the first information includes at least one fourth information element. The at least one fourth information element indicates identification information or position information of the PRACH occasion(s) for PRACH repetition in the at least one duration.

In some embodiments, the at least one duration includes the first duration.

The first duration includes part or all of the M association periods, the resources for PRACH repetition are located in the M association periods, each of the M association periods includes at least one PRACH occasion for PRACH repetition, M is a positive integer, and M > 1.

In some embodiments, a correspondence between a duration and an association period is configured by the network device, or a correspondence between a duration and an association period is stipulated by protocol.

In some embodiments, the number of the PRACH occasions available for PRACH repetition in the first duration is greater than or equal to the number of times of PRACH repetition, or the number of the PRACH occasions available for PRACH repetition in the first duration is less than the number of times of PRACH repetition.

In some embodiments, in case that the number of the PRACH occasions available for PRACH repetition in the first duration is less than the number of times of PRACH repetition, after determining the PRACH occasion(s) for PRACH repetition in the first duration, the PRACH occasion(s) for PRACH repetition in a next duration of the first duration are determined until a determined number of the PRACH occasions satisfies the number of times of PRACH repetition.

In some embodiments, the first information includes feature combination element information associated with PRACH repetition. The feature combination element information is used to configure at least one of following: the association periods in which the resources for PRACH repetition are located, the PRACH occasions in the association periods in which the resources for PRACH repetition are located, the duration(s) in which the resources for PRACH repetition are located and the PRACH occasion(s) in the duration(s), or preamble(s) associated with PRACH repetition.

In some embodiments, in case that the first information is at least used to configure the RACH configuration dedicated to PRACH repetition, the first information includes a PRACH configuration index dedicated to PRACH repetition. The PRACH configuration index dedicated to PRACH repetition indicates the RACH configuration dedicated to PRACH repetition.

In some embodiments, the RACH configuration dedicated to PRACH repetition includes an uplink BWP dedicated to PRACH repetition.

In some embodiments, the above communication unit may be a communication interface, a transceiver or an input-output interface of a communication chip or a system-on-chip. The processing unit may be one or more processors.

It should be understood that the network device 400 based on the embodiment of the present disclosure may correspond to the network device in the method embodiments of the present disclosure, and the above and other operations and/or functions of the various units in the network device 400 are used for implementing the corresponding flows of the network device in the method 200 illustrated in FIG. 6, which are not repeated here for the sake of brevity.

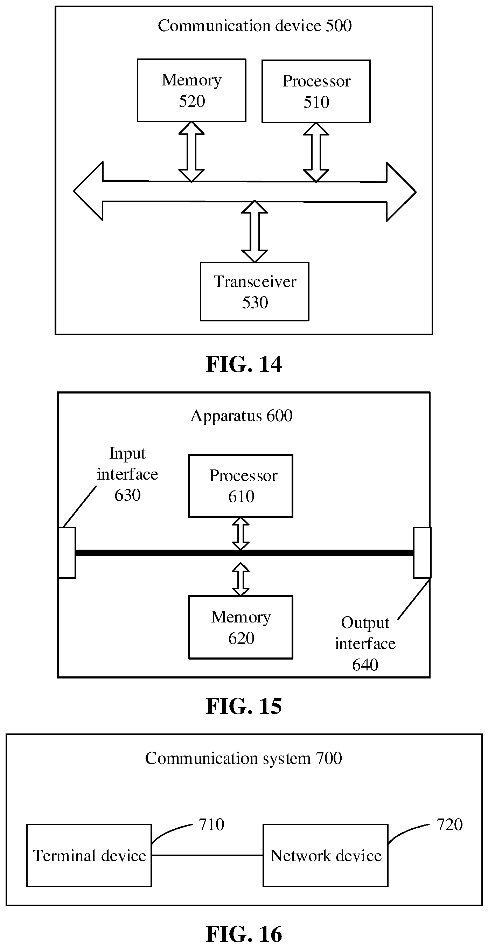

FIG. 14 is a schematic structural diagram of a communication device 500 provided by an embodiment of the present disclosure. The communication device 500 illustrated in FIG. 14 includes a processor 510. The processor 510 may invoke and run a computer program from a memory to perform the method in the embodiments of the present disclosure.

In some embodiments, the communication device 500 may further include a memory 520. The processor 510 may invoke and run a computer program from the memory 520 to perform the methods in the embodiments of the present disclosure.

The memory 520 may be a separate device independent of the processor 510 or may be integrated in the processor 510.

In some embodiments, as illustrated in FIG. 14, the communication device 500 may further include a transceiver 530. The processor 510 may control the transceiver 530 to communicate with other devices, and in particular, may transmit information or data to the other devices, or receive information or data transmitted by the other devices.

The transceiver 530 may include a transmitter and a receiver. The transceiver 530 may further include one or more antennas.

In some embodiments, the processor 510 may implement the function of a processing unit in a terminal device, or the processor 510 may implement the function of a processing unit in a network device, which will not be repeated here for the sake of brevity.

In some embodiments, the transceiver 530 may implement the function of the communication unit in the terminal device, which will not be repeated here for the sake of brevity.

In some embodiments, the transceiver 530 may implement the function of a communication unit in a network device, which will not be repeated here for the sake of brevity.

In some embodiments, the communication device 500 may be specifically a network device in the embodiments of the present disclosure, and the communication device 500 may implement corresponding processes implemented by the network device in various methods of the embodiments of the present disclosure, which will not be repeated here for the sake of brevity.

In some embodiments, the communication device 500 may be specifically a terminal device in the embodiments of the present disclosure, and the communication device 500 may implement corresponding processes implemented by the terminal device in various methods of the embodiments of the present disclosure, which will not be repeated here for the sake of brevity.

FIG. 15 is a schematic structural diagram of an apparatus according to an embodiment of the present disclosure. The apparatus 600 illustrated in FIG. 15 includes a processor 610. The processor 610 may invoke and run a computer program from a memory to perform the method in the embodiments of the present disclosure.

In some embodiments, the apparatus 600 illustrated in FIG. 15 may further include a memory 620. The processor 610 may invoke and run a computer program from the memory 620 to perform the methods in the embodiments of the present disclosure.

The memory 620 may be a separate device independent of the processor 610 or may be integrated in the processor 610.

In some embodiments, the apparatus 600 may further include an input interface 630. The processor 610 may control the input interface 630 to communicate with other devices or chips, and in particular, may obtain information or data transmitted by the other devices or chips. Alternatively, the processor 610 may be located in chip or off chip.

In some embodiments, the processor 610 may implement the function of a processing unit in a terminal device, or the processor 610 may implement the functions of a processing unit in a network device, which will not be repeated here for the sake of brevity.

In some embodiments, the input interface 630 may implement a function of a communication unit in a terminal device, or the input interface 630 may implement a function of a communication unit in a network device.

In some embodiments, the apparatus 600 may further include an output interface 640. The processor 610 may control the output interface 640 to communicate with other devices or chips, and in particular, may output information or data to the other devices or chips. Alternatively, the processor 610 may be located in chip or off chip.

In some embodiments, the output interface 640 may implement a function of a communication unit in a terminal device, or the output interface 640 may implement a function of a communication unit in a network device.

In some embodiments, the apparatus may be applied to the network device in the embodiments of the present disclosure, and the apparatus may implement corresponding processes implemented by the network device in various methods of the embodiments of the present disclosure, which will not be repeated here for the sake of brevity.

In some embodiments, the apparatus may be applied to the terminal device in the embodiments of the present disclosure, and the apparatus may implement corresponding processes implemented by the terminal device in various methods of the embodiments of the present disclosure, which will not be repeated here for the sake of brevity.

In some embodiments, the apparatus mentioned in the embodiment of the present disclosure may also be a chip. For example, it may be a system level chip, a system chip, a chip system or a system-on-chip or the like.

FIG. 16 is a schematic block diagram of a communication system 700 according to an embodiment of the present disclosure. As illustrated in FIG. 16, the communication system 700 includes a terminal device 710 and a network device 720.

The terminal device 710 may be used to implement the corresponding functions implemented by the terminal device in the above methods, and the network device 720 may be used to implement the corresponding functions implemented by the network device in the above methods, which will not be repeated here for the sake of brevity.

It should be understood that the processor in the embodiments of the present disclosure may be an integrated circuit chip having signal processing capability. In implementation, the operations of the above method embodiments may be accomplished by integrated logic circuitry of hardware in the processor or instructions in the form of software. The above processor may be a general purpose processor, a Digital Signal Processor (DSP), an Application Specific Integrated Circuit (ASIC), a Field Programmable Gate Array (FPGA), other programmable logic devices, discrete gates, transistor logic devices, or discrete hardware components. The methods, operations and logic block diagrams disclosed in the embodiments of the present disclosure may be implemented or performed. The general purpose processor may be a microprocessor or the processor may be any conventional processor or the like. The operations of the methods disclosed in combination with the embodiments of the present disclosure may be directly embodied as the execution of the hardware decoding processor or the combined execution of the hardware and software modules in the decoding processor. The software module may be located in a Random Access Memory (RAM), a flash memory, a Read-Only Memory (ROM), a Programmable ROM (PROM), an electrically erasable PROM (EEPROM), a register and other storage medium mature in the art. The storage medium is located in the memory, and the processor reads the information in the memory and completes the operations of the methods in combination with its hardware.

It is understood that the memory in embodiments of the present disclosure may be a volatile memory or a non-volatile memory or may include both volatile and non-volatile memory. The nonvolatile memory may be a ROM, a PROM, an Erasable PROM (EPROM), an EEPROM, or a flash memory. The volatile memory may be a RAM which serves as an external cache. By way of illustration, but not limitation, many forms of RAM are available, such as a static RAM (SRAM), a Dynamic RAM (DRAM), a Synchronous DRAM (SDRAM), Double Data Rate SDRAM (DDR SDRAM), an Enhanced SDRAM (ESDRAM), an Synchlink DRAM (SLDRAM), and a Direct Rambus RAM (DR RAM). It should be noted that the memory of the systems and methods described herein is intended to include but not limited to these and any other suitable types of memory.

It should be understood that the above memory is exemplary, but not limiting, and, for example, the memory in embodiments of the present disclosure may also be an SRAM, a DRAM, an SDRAM, a DDR SDRAM, an ESDRAM, an SLDRAM, a DR RAM, etc. That is, the memory in embodiments of the present disclosure is intended to include but not limited to these and any other suitable types of memory.

The embodiments of the present disclosure further provide a computer readable storage medium for storing computer programs.

In some embodiments, the computer readable storage medium may be applied to the network device in the embodiments of the present disclosure, and the computer programs cause the computer to execute the corresponding flows implemented by the network device in the various methods of the embodiments of the present disclosure, which will not be repeated here for the sake of brevity.

In some embodiments, the computer readable storage medium may be applied to the terminal device in the embodiments of the present disclosure, and the computer programs cause the computer to execute corresponding flows implemented by the terminal device in the various methods of the embodiments of the present disclosure, which will not be repeated here for the sake of brevity.

The embodiments of the present disclosure further provide a computer program product, including computer program instructions.

In some embodiments, the computer program product may be applied to the network device in the embodiments of the present disclosure, and the computer program instructions cause the computer to execute the corresponding flows implemented by the network device in the various methods of the embodiments of the present disclosure, which will not be repeated here for the sake of brevity.

In some embodiments, the computer program product may be applied to the mobile terminal/terminal device in the embodiments of the present disclosure, and the computer program instructions cause the computer to execute corresponding flows implemented by the terminal device in the various methods of the embodiments of the present disclosure, which will not be repeated here for the sake of brevity.

The embodiments of the present disclosure further provide a computer program.

In some embodiments, the computer program may be applied to the network device in the embodiments of the present disclosure and, when the computer program is run on the computer, causes the computer to execute the corresponding flows implemented by the network device in the various methods of the embodiments of the present disclosure, which will not be repeated here for the sake of brevity.

In some embodiments, the computer program may be applied to the terminal device in the embodiments of the present disclosure and, when the computer program is run on the computer, causes the computer to execute the corresponding flows implemented by the terminal device in the various methods of the embodiments of the present disclosure, which will not be repeated here for the sake of brevity.

Those of ordinary skill in the art will appreciate that the various example units and algorithm steps described in combination with the embodiments disclosed herein may be implemented in electronic hardware or a combination of computer software and electronic hardware. Whether these functions are performed in hardware or software depends on the specific application and design constraints of the technical solutions. Skilled artisans may use different methods for each particular application to implement the described functionality, but such implementation should not be considered outside the scope of the present disclosure.

Those skilled in the art will clearly appreciate that, for convenience and conciseness of description, the specific operating processes of the above described systems, apparatuses and units may refer to the corresponding processes in the aforementioned method embodiments, which will not be repeated here for the sake of brevity.

In several embodiments provided herein, it should be understood that the disclosed systems, apparatuses and methods may be implemented in other ways. For example, the above embodiments of the apparatuses are only schematic, for example, the division of the units is only a logical function division, and in practice, there may be another division mode, for example, multiple units or components may be combined or integrated into another system, or some features may be ignored or not performed. On the other hand, the coupling, direct coupling or communication connection between each other shown or discussed may be indirect coupling or communication connection through some interfaces, apparatus or units, and may be electrical, mechanical or other form.

The units illustrated as separate components may or may not be physically separated, and the components displayed as units may or may not be physical units, i.e. may be located in one place, or may be distributed over multiple network units. Part or all of the units may be selected according to the actual needs to achieve the purpose of the embodiments.

In addition, various functional units in each embodiment of the present disclosure may be integrated in one processing unit, each unit may exist physically alone, or two or more units may be integrated in one unit.

The functions may be stored in a computer readable storage medium if implemented in the form of software functional units and sold or used as stand-alone products. With this understanding, the technical solution of the present disclosure in essence or in part contributing to the prior art may be embodied in the form of a software product. The computer software product is stored in a storage medium, which including instructions for causing a computer device (which may be a personal computer, a server, a network device, etc.) to perform all or part of the steps of the methods described in various embodiments of the present disclosure. The above storage medium includes a U disk, a removable hard disk, a ROM, a RAM, a magnetic disk or an optical disk and other medium capable of storing program codes.

The above-mentioned is only the specific embodiments of the present disclosure, but the scope of protection of the present disclosure is not limited thereto. Any technical person familiar with the technical field can easily think of changes or substitutions within the technical scope disclosed in the present disclosure, which should be covered within the scope of protection of the present disclosure. Therefore, the scope of protection of the present disclosure shall be subject to the scope of protection of the claims.

**Claims**

1. A method for wireless communication, comprising:

   receiving, by a terminal device, first information,
   wherein the first information is used to configure at least one of following: association periods in which resources for Physical Random Access Channel (PRACH) repetition are located, PRACH occasions in association periods in which resources for PRACH repetition are located, duration(s) in which resources for PRACH repetition are located, PRACH occasion(s) in duration(s) in which resources for PRACH repetition are located, preamble(s) associated with PRACH repetition, or a Random Access Channel (RACH) configuration dedicated to PRACH repetition.

2. The method of claim 1, wherein,
   in case that the first information is at least used to configure the association periods in which the resources for PRACH repetition are located, the resources for PRACH repetition are located in M association periods, wherein each of the M association periods comprises at least one PRACH occasion for PRACH repetition, M is a positive integer, and M > 1.

3. The method of claim 2, wherein,
   a number of the M association periods is less than or equal to a number of times of PRACH repetition.

4. The method of claim 2 or 3, wherein,

   the PRACH occasions for PRACH repetition in the M association periods are associated with at least one synchronization signal block (SSB),
   wherein the at least one SSB at least comprises a target SSB determined by the terminal device.

5. The method of any one of claims 2 to 4, wherein,
   the first information comprises identification information or position information of a first association period among the M association periods, wherein the M association periods are M consecutive association periods starting from the first association period.

6. The method of claim 5, wherein,

   the identification information of the first association period is determined based on at least one of following: a starting point parameter of association periods, an offset of association periods, or a system frame number; and/or,
   identification information of the M association periods is determined based on at least one of following: a starting point parameter of association periods, a number of association periods, or a system frame number.

7. The method of any one of claims 2 to 6, wherein,
a number of the M association periods is determined based on at least one of following:
a number of times of PRACH repetition, or a number of time division PRACH occasions associated with one SSB in the association periods.

8. The method of claim 7, wherein,
the number of the time division PRACH occasions associated with one SSB in the association periods is determined based on following parameters:

ssb-perRACH-Occasion and msg1-FDM,
wherein ssb-perRACH-Occasion represents a number of SSBs associated with each PRACH occasion, and msg1-FDM represents a number of frequency domain PRACH occasions.

9. The method of claim 7 or 8, wherein,

in case that ssb-perRACH-Occasion * msg1-FDM $\leq$ 1, M = N * ssb-perRACH-Occasion * msg1-FDM;
in case that ssb-perRACH-Occasion * msg1-FDM > 1, M = N;
wherein ssb-perRACH-Occasion represents a number of SSBs associated with each PRACH occasion, msg1-FDM represents a number of frequency domain PRACH occasions, N represents a number of times of PRACH repetition, or N represents a number of PRACH occasions for PRACH repetition, and M is rounded up when M is a non-integer.

10. The method of any one of claims 2 to 9, wherein,
the PRACH occasions for PRACH repetition in the M association periods are preconfigured or stipulated by protocol.

11. The method of claim 10, wherein,
at least one time division PRACH occasion associated with one SSB in an association period is preconfigured or stipulated by protocol for PRACH repetition.

12. The method of any one of claims 1 to 9, wherein,
in case that the first information is at least used to configure the PRACH occasions in the association periods in which the resources for PRACH repetition are located, the first information is used to configure the PRACH occasions for PRACH repetition in the M association periods, wherein each of the M association periods comprises at least one PRACH occasion for PRACH repetition, M is a positive integer, and M > 1.

13. The method of claim 12, wherein the first information comprises identification information or position information of part or all of the M association periods, and/or the first information comprises identification information or position information of the PRACH occasions for PRACH repetition in the M association periods.

14. The method of claim 12, wherein,

the first information comprises at least one first information element, wherein the at least one first information element indicates identification information or position information of part or all of the M association periods; and/or,
the first information comprises at least one second information element, wherein the at least one second information element indicates identification information or position information of the PRACH occasions for PRACH repetition in the M association periods.

15. The method of claim 1, wherein,
in case that the first information is at least used to configure the duration(s) in which the resources for PRACH repetition are located and/or the PRACH occasion(s) in the duration(s) in which the resources for PRACH repetition are located, the resources for PRACH repetition are located in at least one duration, wherein each of the at least one duration comprises at least one PRACH occasion for PRACH repetition.

16. The method of claim 15, wherein the first information comprises identification information or position information of part or all of the at least one duration, and/or the first information comprises identification information or position information of the PRACH occasions for PRACH repetition in the at least one duration.

**17.** The method of claim 15, wherein,

the first information comprises at least one third information element, wherein the at least one third information element indicates identification information or position information of part or all of the at least one duration; and/or, the first information comprises at least one fourth information element, wherein the at least one fourth information element indicates identification information or position information of PRACH occasion(s) for PRACH repetition in the at least one duration.

**18.** The method of any one of claims 15 to 17, wherein,

the at least one duration comprises a first duration; wherein the first duration comprises part or all of the M association periods, the resources for PRACH repetition are located in the M association periods, each of the M association periods comprises at least one PRACH occasion for PRACH repetition, M is a positive integer, and M > 1.

**19.** The method of claim 18, wherein a correspondence between a duration and an association period is configured by a network device, or a correspondence between a duration and an association period is stipulated by a protocol.

**20.** The method of claim 18 or 19, wherein a number of the PRACH occasions available for PRACH repetition in the first duration is greater than or equal to a number of times of PRACH repetition, or a number of the PRACH occasions available for PRACH repetition in the first duration is less than a number of times of PRACH repetition.

**21.** The method of claim 20, further comprising:

in case that the number of the PRACH occasions available for PRACH repetition in the first duration is less than the number of times of PRACH repetition, after determining PRACH occasion(s) for PRACH repetition in the first duration, determining PRACH occasion(s) for PRACH repetition in a duration next the first duration until a determined number of PRACH occasions satisfies the number of times of PRACH repetition.

**22.** The method of any one of claims 1 to 21, wherein,
the first information comprises feature combination element information associated with PRACH repetition, wherein the feature combination element information is used to configure at least one of following:
the association periods in which the resources for PRACH repetition are located, the PRACH occasions in the association periods in which the resources for PRACH repetition are located, the duration(s) in which the resources for PRACH repetition are located and the PRACH occasion(s) in the duration(s), or preamble(s) associated with PRACH repetition.

**23.** The method of claim 1, wherein,
in case that the first information is at least used to configure the RACH configuration dedicated to PRACH repetition, the first information comprises a PRACH configuration index dedicated to PRACH repetition, wherein the PRACH configuration index dedicated to PRACH repetition indicates the RACH configuration dedicated to PRACH repetition.

**24.** The method of claim 23, wherein the RACH configuration dedicated to PRACH repetition comprises an uplink Band Width Part (BWP) dedicated to PRACH repetition.

**25.** A method for wireless communication, comprising:

transmitting, by a network device, first information,
wherein the first information is used to configure at least one of following: association periods in which resources for Physical Random Access Channel (PRACH) repetition are located, PRACH occasions in association periods in which resources for PRACH repetition are located, duration(s) in which resources for PRACH repetition are located, PRACH occasion(s) in duration(s) in which resources for PRACH repetition are located, preamble(s) associated with PRACH repetition, or a Random Access Channel (RACH) configuration dedicated to PRACH repetition.

**26.** The method of claim 25, wherein,
in case that the first information is at least used to configure the association periods in which the resources for PRACH repetition are located, the resources for PRACH repetition are located in M association periods, wherein each of the M association periods comprises at least one PRACH occasion for PRACH repetition, M is a positive integer, and M > 1.

27. The method of claim 26, wherein,
a number of the M association periods is less than or equal to a number of times of PRACH repetition.

28. The method of claim 26 or 27, wherein,

the PRACH occasions for PRACH repetition in the M association periods are associated with at least one synchronization signal block (SSB),
wherein the at least one SSB at least comprises a target SSB determined by the terminal device.

29. The method of any one of claims 26 to 28, wherein,
the first information comprises identification information or position information of a first association period among the M association periods, wherein the M association periods are M consecutive association periods starting from the first association period.

30. The method of claim 29, wherein,

the identification information of the first association period is determined based on at least one of following: a starting point parameter of association periods, an offset of association periods, or a system frame number; and/or,
identification information of the M association periods is determined based on at least one of following: a starting point parameter of association periods, a number of association periods, or a system frame number.

31. The method of any one of claims 26 to 30, wherein,
a number of the M association periods is determined based on at least one of following:
a number of times of PRACH repetition, or a number of time division PRACH occasions associated with one SSB in the association periods.

32. The method of claim 31, wherein,
the number of the time division PRACH occasions associated with one SSB in the association periods is determined based on following parameters:

ssb-perRACH-Occasion and msg1-FDM,
wherein ssb-perRACH-Occasion represents a number of SSBs associated with each PRACH occasion, and msg1-FDM represents a number of frequency domain PRACH occasions.

33. The method of claim 31 or 32, wherein,

in case that ssb-perRACH-Occasion * msg1-FDM $\leq$ 1, M = N * ssb-perRACH-Occasion * msg1-FDM;
in case that ssb-perRACH-Occasion * msg1-FDM > 1, M = N;
wherein ssb-perRACH-Occasion represents a number of SSBs associated with each PRACH occasion, msg1-FDM represents a number of frequency domain PRACH occasions, N represents a number of times of PRACH repetition, or N represents a number of PRACH occasions for PRACH repetition, and M is rounded up when M is a non-integer.

34. The method of any one of claims 26 to 33, wherein,
the PRACH occasions for PRACH repetition in the M association periods are preconfigured or stipulated by protocol.

35. The method of claim 34, wherein,
at least one time division PRACH occasion associated with one SSB in an association period is preconfigured or stipulated by protocol for PRACH repetition.

36. The method of any one of claims 25 to 33, wherein,
in case that the first information is at least used to configure the PRACH occasions in the association periods in which the resources for PRACH repetition are located, the first information is used to configure the PRACH occasions for PRACH repetition in the M association periods, wherein each of the M association periods comprises at least one PRACH occasion for PRACH repetition, M is a positive integer, and M > 1.

37. The method of claim 36, wherein the first information comprises identification information or position information of part or all of the M association periods, and/or the first information comprises identification information or position information of the PRACH occasions for PRACH repetition in the M association periods.

38. The method of claim 36, wherein,

the first information comprises at least one first information element, wherein the at least one first information element indicates identification information or position information of part or all of the M association periods; and/or,
the first information comprises at least one second information element, wherein the at least one second information element indicates identification information or position information of the PRACH occasions for PRACH repetition in the M association periods.

39. The method of claim 25, wherein,
in case that the first information is at least used to configure the duration(s) in which the resources for PRACH repetition are located and/or the PRACH occasion(s) in the duration(s) in which the resources for PRACH repetition are located, the resources for PRACH repetition are located in at least one duration, wherein each of the at least one duration comprises at least one PRACH occasion for PRACH repetition.

40. The method of claim 39, wherein the first information comprises identification information or position information of part or all of the at least one duration, and/or the first information comprises identification information or position information of the PRACH occasions for PRACH repetition in the at least one duration.

41. The method of claim 39, wherein,

the first information comprises at least one third information element, wherein the at least one third information element indicates identification information or position information of part or all of the at least one duration; and/or,
the first information comprises at least one fourth information element, wherein the at least one fourth information element indicates identification information or position information of PRACH occasion(s) for PRACH repetition in the at least one duration.

42. The method of any one of claims 39 to 41, wherein,

the at least one duration comprises a first duration;
wherein the first duration comprises part or all of the M association periods, the resources for PRACH repetition are located in the M association periods, each of the M association periods comprises at least one PRACH occasion for PRACH repetition, M is a positive integer, and M > 1.

43. The method of claim 42, wherein a correspondence between a duration and an association period is configured by the network device, or a correspondence between a duration and an association period is stipulated by a protocol.

44. The method of claim 42 or 43, wherein a number of the PRACH occasions available for PRACH repetition in the first duration is greater than or equal to a number of times of PRACH repetition, or a number of the PRACH occasions available for PRACH repetition in the first duration is less than a number of times of PRACH repetition.

45. The method of claim 44, further comprising,
in case that the number of the PRACH occasions available for PRACH repetition in the first duration is less than the number of times of PRACH repetition, after determining PRACH occasion(s) for PRACH repetition in the first duration, determining PRACH occasion(s) for PRACH repetition in a duration next the first duration until a determined number of PRACH occasions satisfies the number of times of PRACH repetition.

46. The method of any one of claims 25 to 45, wherein,
the first information comprises feature combination element information associated with PRACH repetition, wherein the feature combination element information is used to configure at least one of following:
the association periods in which the resources for PRACH repetition are located, the PRACH occasions in the association periods in which the resources for PRACH repetition are located, the duration(s) in which the resources for PRACH repetition are located and the PRACH occasion(s) in the duration(s), or preamble(s) associated with PRACH repetition.

47. The method of claim 25, wherein,
in case that the first information is at least used to configure the RACH configuration dedicated to PRACH repetition, the first information comprises a PRACH configuration index dedicated to PRACH repetition, wherein the PRACH configuration index dedicated to PRACH repetition indicates the RACH configuration dedicated to PRACH repetition.

48. The method of claim 47, wherein the RACH configuration dedicated to PRACH repetition comprises an uplink Band Width Part (BWP) dedicated to PRACH repetition.

49. A terminal device, comprising:

a communication unit, configured to receive first information,
wherein the first information is used to configure at least one of following: association periods in which resources for Physical Random Access Channel (PRACH) repetition are located, PRACH occasions in association periods in which resources for PRACH repetition are located, duration(s) in which resources for PRACH repetition are located, PRACH occasion(s) in duration(s) in which resources for PRACH repetition are located, preamble(s) associated with PRACH repetition, or a Random Access Channel (RACH) configuration dedicated to PRACH repetition.

50. A network device, comprising:

a communication unit, configured to transmit first information,
wherein the first information is used to configure at least one of following: association periods in which resources for Physical Random Access Channel (PRACH) repetition are located, PRACH occasions in association periods in which resources for PRACH repetition are located, duration(s) in which resources for PRACH repetition are located, PRACH occasion(s) in duration(s) in which resources for PRACH repetition are located, preamble(s) associated with PRACH repetition, or a Random Access Channel (RACH) configuration dedicated to PRACH repetition.

51. A terminal device comprising a processor and a memory, wherein the memory is configured to store a computer program and the processor is configured to invoke and execute the computer program stored in the memory to cause the terminal device to perform a method of any one of claims 1 to 24.

52. A network device comprising a processor and a memory, wherein the memory is configured to store a computer program and the processor is configured to invoke and execute the computer program stored in the memory to cause the network device to perform a method of any one of claims 25 to 48.

53. A chip comprising: a processor for invoking and executing a computer program from a memory to cause a device on which the chip is mounted to perform a method of any one of claims 1 to 24.

54. A chip comprising: a processor for invoking and executing a computer program from a memory to cause a device on which the chip is mounted to perform a method of any one of claims 25 to 48.

55. A computer readable storage medium for storing a computer program that, when executed, a method of any one of claims 1 to 24 is implemented.

56. A computer readable storage medium for storing a computer program that, when executed, a method of any one of claims 25 to 48 is implemented.

57. A computer program product comprising computer program instructions that, when executed, a method of any one of claims 1 to 24 is implemented.

58. A computer program product comprising computer program instructions that, when executed, a method of any one of claims 25 to 48 is implemented.

59. A computer program that, when executed, a method of any one of claims 1 to 24 is implemented.

60. A computer program that, when executed, a method of any one of claims 25 to 48 is implemented.

**100**

**FIG. 1**

OFDM symbol

**FIG. 2**

| 7 |
| 6 |
| 5 |
| 4 |
| 3 |
| 2 |
| 1 |
| 0 |

Random access message 1
frequency starting point
*msg1-FrequencyStart*

Bandwidth of
uplink BWP

| 0 | PRACH occasion 0

**FIG. 3**

Frequency
domain

| SSB 0 | SSB 1 | SSB 2 | SSB 3 | SSB 4 | SSB 5 | SSB 6 | SSB 7 |
| SSB 0 | SSB 1 | SSB 2 | SSB 3 | SSB 4 | SSB 5 | SSB 6 | SSB 7 |
| SSB 0 | SSB 1 | SSB 2 | SSB 3 | SSB 4 | SSB 5 | SSB 6 | SSB 7 |
| SSB 0 | SSB 1 | SSB 2 | SSB 3 | SSB 4 | SSB 5 | SSB 6 | SSB 7 |

Time domain

| SSB 0 | PRACH occasion corresponding to SSB 0

**FIG. 4**

RAR

Msg 2 RAR Reception
window

UE
downlink

PRACH PRACH PRACH PRACH

Msg 1 Msg 1 Msg 1 Msg 1

UE
uplink

PRACH repetition

**FIG. 5**

**200**

| Terminal device | | Network device |

S210: The network device transmits first information. The first information is used to configure at least one of following: association periods in which resources for PRACH repetition are located, PRACH occasions in association periods in which resources for PRACH repetition are located, duration(s) in which resources for PRACH repetition are located, PRACH occasion(S) in duration(s) in which resources for PRACH repetition are located, preamble(s) associated with PRACH repetition, or a RACH configuration dedicated to PRACH repetition

S220: The terminal device receives the first information

**FIG. 6**

Association period 0        Association period 1    ⋯

| Frame 0 | ⋯ | | ⋯ | ⋯ |

## FIG. 7

Frequency domain

| SSB 0 | SSB 1 | SSB 2 | SSB 3 |
| SSB 0 | SSB 1 | SSB 2 | SSB 3 |
| SSB 0 | SSB 1 | SSB 2 | SSB 3 |
| SSB 0 | SSB 1 | SSB 2 | SSB 3 |

Time domain

| SSB 0 | PRACH occasion corresponding to SSB 0 |

## FIG. 8

Frequency domain

| SSB 0 | SSB 0 | SSB 1 | SSB 1 | SSB 2 | SSB 2 | SSB 3 | SSB 3 |
| SSB 0 | SSB 0 | SSB 1 | SSB 1 | SSB 2 | SSB 2 | SSB 3 | SSB 3 |

Time domain

| SSB 0 | PRACH occasion corresponding to SSB 0 |

## FIG. 9

FIG. 10

FIG. 11

FIG. 12

FIG. 13

Communication device 500

Memory
520

Processor
510

Transceiver
530

**FIG. 14**

Apparatus 600

Input
interface
630

Processor
610

Memory
620

Output
interface
640

**FIG. 15**

Communication system 700

Terminal device — 710

Network device — 720

**FIG. 16**

## INTERNATIONAL SEARCH REPORT

International application No.

**PCT/CN2022/105095**

### A. CLASSIFICATION OF SUBJECT MATTER

H04W 72/04(2009.01)i; H04W 74/08(2009.01)i

According to International Patent Classification (IPC) or to both national classification and IPC

### B. FIELDS SEARCHED

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNKI, CNPAT, EPODOC, WPI, 3GPP: 配置, 物理随机接入信道, 持续时间, 重复传输, 关联周期, 时机, 机会, 前导码, PRACH occasion, repetition, period, index, SSB, PBCH

### C. DOCUMENTS CONSIDERED TO BE RELEVANT

| Category* | Citation of document, with indication, where appropriate, of the relevant passages | Relevant to claim No. |
|---|---|---|
| X | WO 2022006851 A1 (GUANGDONG OPPO MOBILE COMMUNICATIONS CO., LTD.) 13 January 2022 (2022-01-13) <br> description, page 7, line 4 to page 9, line 22, and page 11, line 34 to page 13, line 40 | 1-60 |
| X | CN 114246015 A (QUALCOMM INC.) 25 March 2022 (2022-03-25) <br> description, paragraphs 8 and 92-93 | 1-60 |
| X | CN 114340014 A (GUANGDONG OPPO MOBILE COMMUNICATIONS CO., LTD.) 12 April 2022 (2022-04-12) <br> description, paragraphs 56-132 | 1-60 |
| A | US 2021058971 A1 (SAMSUNG ELECTRONICS CO., LTD.) 25 February 2021 (2021-02-25) <br> entire document | 1-60 |
| A | CN 114651518 A (LENOVO (BEIJING) LIMITED) 21 June 2022 (2022-06-21) <br> entire document | 1-60 |
| A | WO 2021129555 A1 (QUALCOMM INCORPORATED) 01 July 2021 (2021-07-01) <br> entire document | 1-60 |

☐ Further documents are listed in the continuation of Box C.   ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **14 November 2022** | **28 November 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/105095**

| Patent document cited in search report | | | Publication date (day/month/year) | Patent family member(s) | | | Publication date (day/month/year) |
|---|---|---|---|---|---|---|---|
| WO | 2022006851 | A1 | 13 January 2022 | None | | | |
| CN | 114246015 | A | 25 March 2022 | WO | 2021026710 | A1 | 18 February 2021 |
| | | | | EP | 4014671 | A1 | 22 June 2022 |
| | | | | US | 2022330348 | A1 | 13 October 2022 |
| | | | | WO | 2021027798 | A1 | 18 February 2021 |
| | | | | IN | 202247003836 | A | 04 March 2022 |
| CN | 114340014 | A | 12 April 2022 | CN | 113767707 | A | 07 December 2021 |
| | | | | WO | 2020248287 | A1 | 17 December 2020 |
| | | | | US | 2022061105 | A1 | 24 February 2022 |
| US | 2021058971 | A1 | 25 February 2021 | US | 2022256612 | A1 | 11 August 2022 |
| | | | | EP | 3997949 | A1 | 18 May 2022 |
| | | | | WO | 2021034084 | A1 | 25 February 2021 |
| CN | 114651518 | A | 21 June 2022 | WO | 2021087978 | A1 | 14 May 2021 |
| WO | 2021129555 | A1 | 01 July 2021 | EP | 4082285 | A1 | 02 November 2022 |
| | | | | WO | 2021127962 | A1 | 01 July 2021 |
| | | | | CN | 114868452 | A | 05 August 2022 |

Form PCT/ISA/210 (patent family annex) (January 2015)